# EUROPEAN PATENT SPECIFICATION

(11) **EP 4 013 148 B1**
(45) Date of publication and mention of the grant of the patent: **21.10.2026**
(21) Application number: 19942226.2
(22) Date of filing: 16.08.2019
(51) Int. Cl.: H04W 72/0453, H04L 5/00, H04L 1/16, H04W 72/23

(54) **METHOD FOR DATA TRANSMISSION, TERMINAL DEVICE AND NETWORK DEVICE**
VERFAHREN ZUR DATENÜBERTRAGUNG, ENDGERÄTEVORRICHTUNG UND NETZWERKVORRICHTUNG
PROCÉDÉ DE TRANSMISSION DE DONNÉES, DISPOSITIF TERMINAL, ET DISPOSITIF RÉSEAU

(43) Date of publication of application: 15.06.2022
(73) Proprietor: Huawei Technologies Co., Ltd., Longgang District Shenzhen Guangdong 518129 (CN)
(72) Inventor: ZHENG, Juan, Shenzhen, Guangdong 518129 (CN); LI, Chaojun, Shenzhen, Guangdong 518129 (CN)
(74) Representative: MERH-IP Matias Erny Reichl Hoffmann Patentanwälte PartG mbB
(86) International application number: PCT/CN2019/101101
(87) International publication number: WO 2021/030962

(56) References cited:
- CN-A- 109 474 375
- CN-A- 109 788 553
- CN-A- 110 099 447
- CN-A- 110 121 210
- US-A1- 2017 238 249
- US-A1- 2019 141 546
- US-A1- 2019 222 404
- VIVO: "Remaining issues on BWP operation", vol. RAN WG1, no. Athens, Greece; 20180226 - 20180302, 15 February 2018 (2018-02-15), XP051396796, Retrieved from the Internet <URL:http://www.3gpp.org/ftp/tsg%5Fran/WG1%5FRL1/TSGR1%5F92/Docs/> [retrieved on 20180215]
- MEDIATEK INC.: "Design of PDCCH-based power saving signal/channel for NR", 3GPP TSG RAN WG1 MEETING #96-BIS; R1-1904487, 3RD GENERATION PARTNERSHIP PROJECT (3GPP), SOPHIA-ANTIPOLIS CEDEX ; FRANCE, 3 April 2019 (2019-04-03), Xi’an, China; 20190408 - 20190412, XP051707229

## Description

### TECHNICAL FIELD

This application relates to the communication field, and more specifically, to a data transmission method, a terminal device, and a network device.

### BACKGROUND

5th generation (the fifth-generation, 5G) mobile communication technology new radio (new radio, NR) is a global 5G standard for a brand-new air interface design based on orthogonal frequency division multiplexing (orthogonal frequency division multiplexing, OFDM), and is also a foundation for a quite important next generation cellular mobile technology. Services of the 5G technology are quite diversified, and include an enhanced mobile broadband (enhanced mobile broadband, eMBB) service, an ultra-reliable low-latency communication (ultra-reliability low-latency communication, URLLC) service, and a massive machine-type communications (massive machine-type communication, mMTC) service.

Machine-type communications are one of foundations of the internet of everything. For a machine-type communications service, standby time of a terminal device is an important aspect of user experience. Generally, longer standby time of the terminal device indicates longer available time of the terminal device, and this is equivalent to lower costs paid by a user when using the terminal device. In addition, in some machine-type communications scenarios, for example, a device such as a water meter installed in a basement, it is not suitable for replacing a power supply device. In this case, it is more necessary to ensure the standby time of the terminal device. Therefore, from a perspective of user experience, reducing power consumption of a terminal device and ensuring standby time of the terminal device is of great significance in communication research.

Currently, to ensure data transmission performance, data transmission between a terminal device and a network device may be performed in different bandwidth parts (bandwidth parts, BWPs). However, to simplify implementation complexity of the terminal device, data transmission between the terminal device and the network device can be performed only in one active BWP at each moment in a data transmission process, so that the terminal device needs to perform switching in different BWPs to ensure the data transmission performance. Currently, there are mainly two manners of indicating the terminal device to perform BWP switching: (1) The terminal device obtains information related to BWP switching by detecting downlink control information (downlink control information, DCI) in two formats. That is, in addition to detecting fallback DCI (fall back DCI, FB DCI) that the terminal device generally needs to detect, the terminal device needs to detect non-fallback DCI (non fall back DCI, non-FB DCI) that includes BWP switching information. (2) The terminal device keeps detecting control information in a current BWP in specific timing duration. When no control information is detected in the timing duration, the terminal device determines to perform BWP switching.

However, in the manner (1), the terminal device needs to detect a plurality of DCI formats, and in the manner (2), the terminal device needs to keep detecting the control information in the timing duration. In the two manners, power consumption increases when the terminal device performs BWP switching, and a relatively high latency is caused when the terminal device performs BWP switching.

Therefore, for machine-type communications, how to reduce power consumption caused when the terminal device performs BWP switching, to further ensure the standby time of the terminal device is a problem that needs to be considered in machine-type communications research.

Document US 2019/141546 relates to systems, apparatuses, and methods for wireless communications. In particular, a base station may send, to a wireless device, a medium access control (MAC) control element (CE) comprising a bandwidth part identifier field and a channel state information (CSI) report configuration field. Based on the MAC CE, the wireless device may activate the CSI report configuration for a bandwidth part indicated by the bandwidth part identifier field. The wireless device may transmit one or more CSI reports based on the CSI report configuration.

Document US 2019/222404 A1 relates to techniques for scheduling communication resources of a BWP after a BWP switching event when the frequency range of an active BWP is different than the frequency range of a target BWP. A user equipment (UE) may interpret the resource allocation field in scheduling DCI that triggers a BWP switching event based on the active BWP. The UE and a base station may be configured to communicate using at least a portion of the resources of the active BWP in the first transmission opportunity after the BWP switching event. In subsequent transmitting opportunities where a scheduling DCI for the target BWP is received by the UE, the UE may interpret the resource allocation field of the new DCI as being based on the target BWP.

Document VIVO: "Remaining issues on BWP operations", 3GPP DRAFT; R1-1801544, vol. RAN WG1, no. Athens, Greece; 20180226 - 20180302 15 February 2018 proposes to reconsider the working assumption made for DCI based BWP switching mechanism.

### SUMMARY

This application provides a data transmission method, a terminal device, and a network device, to resolve a problem of high power consumption caused when a terminal device performs BWP switching. Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide data transmission methods and a corresponding communication device.

According to a first aspect, a data transmission method is provided. The method includes: receiving, by a terminal device, first control information sent by a network device, wherein the first control information indicates configuration information used by the terminal device to perform data transmission or indicates bandwidth part, BWP, switching information used by the terminal device to perform BWP switching; when the first control information indicates the configuration information, performing, by the terminal device, data transmission based on the configuration information; or when the first control information indicates the BWP switching information, performing, by the terminal device, BWP switching based on the BWP switching information, wherein that the first control information indicates configuration information used by the terminal device to perform data transmission or indicates BWP switching information used by the terminal device to perform BWP switching comprises: the first control information comprises K bits, the first control information corresponds to one type of status information in 2K states corresponding to the K bits, and K is a positive integer, wherein X pieces of status information in the 2K types of status information is used to indicate the configuration information used by the terminal device to perform data transmission, Y pieces of status information in the 2K types of status information is used to indicate the BWP switching information, the X pieces of status information are all different from the Y pieces of status information, both X and Y are positive integers, and X+Y<2^{K}.

According to the data transmission method provided in this embodiment of this application, the first control information may be used to indicate the configuration information used by the terminal device to perform data transmission, or may be used to indicate the terminal device to perform frequency band switching. In other words, the terminal device may read DCI only in one format (namely, the first control information). In this way, the terminal device may perform data transmission or frequency band switching based on content of the first control information without reading a plurality of DCI formats. This reduces power consumption of the terminal device and a latency in frequency band switching performed by the terminal device.

For example, the first control information includes two bits. In a binary system, the first control information may correspond to four types of status information, for example, 00, 01, 10, and 11. In this case, the first two types of status information (00 and 01) may be used to indicate the configuration information used by the terminal device to perform data transmission. However, because the latter two types of status information (10 and 11) are different from the states (00 and 01) indicating the configuration information, it may be determined that 10 and 11 are used to indicate the frequency band switching information, for example, indicate the terminal device to switch from a frequency band on which the terminal device is currently located to another frequency band. In this case, it is implemented that the first control information indicates the configuration information or the frequency band switching information by using different status information of the first control information.

According to the data transmission method provided in this embodiment of this application, the terminal device may obtain the configuration information or frequency band switching indication information without reading a plurality of DCI formats, and does not need to continuously detect control information in timing duration to determine whether to perform frequency band switching. Therefore, power consumption of the terminal device and a latency in performing frequency band switching are reduced.

According to a second aspect, a data transmission method is provided. The method includes: determining, by a network device, first control information, wherein the first control information indicates configuration information used by a terminal device to perform data transmission or indicates BWP switching information used by the terminal device to perform BWP switching; and sending, by the network device, the first control information to the terminal device,wherein that the first control information indicates configuration information of the terminal device or indicates BWP switching information used by the terminal device to perform BWP switching comprises the first control information comprises K bits, the first control information corresponds to one of 2K types of status information corresponding to the K bits, and K is a positive integer, wherein X pieces of status information in the 2K types of status information is used to indicate the configuration information used by the terminal device to perform data transmission, Y pieces of status information in the 2K types of status information is used to indicate the BWP switching information, the X pieces of status information are all different from the Y pieces of status information, both X and Y are positive integers, and X+Y<2^{K}.

According to the data transmission method provided in this embodiment of this application, the first control information may be used to indicate the configuration information used by the terminal device to perform data transmission, or may be used to indicate the terminal device to perform frequency band switching. In other words, the terminal device may read DCI only in one format (namely, the first control information). In this way, the terminal device may perform data transmission or frequency band switching based on content of the first control information without reading a plurality of DCI formats. This reduces power consumption of the terminal device and a latency in frequency band switching performed by the terminal device.

For example, the first control information includes two bits. In a binary system, the first control information may include four states, for example, 00, 01, 10, and 11. In this case, 00 and 01 may be used to indicate the configuration information used by the terminal device to perform data transmission. However, because 10 and 11 are different from the states (00 and 01) indicating the configuration information, it may be determined that 10 and 11 are used to indicate the frequency band switching information, for example, indicate the terminal device to switch from a frequency band on which the terminal device is currently located to another frequency band. In this case, it is implemented that the first control information indicates the configuration information or the frequency band switching information by using different status information of the first control information.

According to the data transmission method provided in this embodiment of this application, the terminal device may obtain the configuration information or frequency band switching indication information without reading a plurality of DCI formats, and does not need to continuously detect control information in timing duration to determine whether to perform frequency band switching. Therefore, power consumption of the terminal device and a latency in performing frequency band switching are reduced.

According to a third aspect, a terminal device is provided. The terminal device includes at least one processor and a communication interface. The communication interface is used by the terminal device to exchange information with a network device. When program instructions are executed in the at least one processor, the terminal device is enabled to implement the method according to any implementation of the first aspect.

According to a fourth aspect, a network device is provided. The network device includes at least one processor and a communication interface. The communication interface is used by the network device to exchange information with a terminal device. When program instructions are executed in the at least one processor, the network device is enabled to implement the method according to any implementation of the second aspect.

According to the data transmission method, the terminal device, and the network device provided in the embodiments of this application, by receiving the first control information that is sent by the network device and that can be used to indicate the configuration information or the BWP switching information, the terminal device may obtain the configuration information or the BWP switching information by detecting only the first control information. This avoids a problem of high power consumption caused by the terminal device detecting DCI in a plurality of formats or keeping enabling detection in timing duration.

### BRIEF DESCRIPTION OF DRAWINGS

FIG. 1 is a schematic diagram of an applicable scenario of a data transmission method;
FIG. 2 is a schematic flowchart of a data transmission method according to an embodiment of this application;
FIG. 3 is a schematic diagram of a representation manner of configuration information and BWP switching information in first control information according to an embodiment of this application;
FIG. 4 is a schematic diagram of another representation manner of configuration information and BWP switching information in first control
FIG. 5 is a schematic diagram of still another representation manner of configuration information and BWP switching information in first control information;
FIG. 6 is a schematic diagram of still another representation manner of configuration information and BWP switching information in first control information according to an embodiment of this application;
FIG. 7 is a schematic diagram of still another representation manner of configuration information and BWP switching information in first control information according to an embodiment of this application;
FIG. 8 is a schematic diagram of a synchronization signal block in a data transmission method according to an embodiment of this application;
FIG. 9 is a schematic diagram of a structure of a terminal device according to an embodiment of this application;
FIG. 10 is a schematic diagram of a structure of a network device according to an embodiment of this application;
FIG. 11 is a schematic diagram of a structure of a terminal device according to an embodiment of this application; and
FIG. 12 is a schematic diagram of a structure of a network device.

### DESCRIPTION OF EMBODIMENTS

Technical solutions according to embodiments of this application are clearly and completely described in the following with reference to accompanying drawings. Clearly, the described embodiments are merely some but not all of the embodiments of this application.

It may be understood that the technical solutions of the embodiments of this application may be applied to various communication systems, such as a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution system, a frequency division duplex (frequency division duplex, LTE FDD) system, a time division duplex (time division duplex, LTE TDD) system, a universal mobile telecommunications system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system. This is not limited in the embodiments of this application. A method provided in the embodiments may be further applied to a communication system, for example, a vehicle to everything (vehicle to everything, V2X) communication system, a long term evolution-vehicle (long term evolution vehicle, LTE-V) communication system, a vehicle to vehicle (vehicle to vehicle, V2V) communication system, a manual toll collection system (manual toll collection system, MTC), an internet of things (Internet of things, IoT) communication system, an LTE-machine to machine (LTE-machine to machine, LTE-M) communication system, and a machine to machine (M2M) communication system.

User equipment (user equipment, UE) in the embodiments of this application may be a terminal device, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network or a terminal device in a future evolved public land mobile network (public land mobile network, PLMN), or the like. This is not limited in the embodiments of this application.

In the embodiments of this application, a base station may be a base transceiver station (base transceiver station, BTS) in GSM or CDMA, may be a NodeB (nodeB, NB) in WCDMA, or may be an evolved NodeB (evolutional node B, eNodeB) in LTE, a base station gNB in 5G, or another network device having a function of a base station. This is not limited in this application.

In the embodiments of this application, the user equipment, a relay device, or a network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in the embodiments of this application is not particularly limited in the embodiments of this application, provided that a program that records code of the method provided in the embodiments of this application can be run to perform communication according to the method provided in the embodiments of this application. For example, the execution body of the method provided in the embodiments of this application may be the terminal device or the network device, or a functional module that can invoke and execute the program in the terminal device or the network device.

In an existing NR system, regardless of a bandwidth capability of a terminal device, data transmission between a network device and a terminal device may be implemented through configuration of a BWP, each BWP includes resource blocks (resource blocks, RBs) that are consecutive in frequency, and one RB includes 12 subcarriers (subcarriers).

For a terminal device, in terms of implementation complexity, on one carrier (carrier), a network device may configure a maximum of four BWPs for the terminal device. If an initial BWP is included, the terminal device may have a maximum of five BWPs. The initial BWP may be considered as a BWP configured by the network device through a physical broadcast channel (physical broadcast channel, PBCH). For example, a range of a frequency resource corresponding to a control resource set 0 (control resource set 0, CORESET 0) configured by the network device through the PBCH may correspond to a range of a frequency resource of the BWP.

In a conventional technology, to ensure data transmission performance, data transmission between a terminal device and a network device may be performed in different BWPs. However, to simplify implementation complexity of the terminal device, data transmission between the terminal device and the network device can be performed only in one active BWP at any moment. In this way, the terminal device needs to repeatedly perform switching in different BWPs, to ensure the data transmission performance. Currently, BWP switching may be implemented in the following manners. For ease of description, the following uses an example in which data transmission between the network device and the terminal device is performed through switching from a BWP A to a BWP B for description.

### (1) Scheduling DCI

In this manner, the scheduling DCI includes indication information of a BWP, and the scheduling DCI sent by the network device in the BWP A may include indication information of the BWP B. After receiving the information, the terminal device performs data transmission with the network device in the BWP B, to complete BWP switching. Specifically, the scheduling DCI may be implemented by using a DCI format 0_1 or a DCI format 1_1, and is sent through a physical downlink control channel (physical downlink control channel, PDCCH).

It should be understood that, in the conventional technology, for terminal device-specific data scheduling, the terminal device may need to detect two DCI formats, and quantities of control information bits included in the two DCI formats are different, or sizes corresponding to the two DCI formats are different. The quantity of control information bits included in one DCI format is fixed, and the quantity of control information bits included in the other DCI format is variable, for example, may vary with information preconfigured by the network device. For example, one DCI format includes control information bits related to a quantity of BWPs. When the quantity of BWPs configured by the network device for the terminal device is 2 or 4, the control information bits related to the quantity of BWPs may be 1 or 2. It can be learned that different information preconfigured by the network device causes different DCI control information included in the DCI format. For ease of description, in the embodiments of this application, a DCI format including a fixed quantity of control information bits is referred to as fallback DCI (fall back DCI, FB DCI), and a DCI format including a variable quantity of control information bits is referred to as a non-fallback DCI (non-fall back DCI, non-FB DCI). The scheduling DCI for implementing BWP switching includes information related to BWP switching, and therefore may be understood as one type of non-FB DCI.

It may be understood that generally, the terminal device detects the FB DCI. However, when sending frequency band switching indication information to the terminal device, the network device needs to send the non-FB DCI to the terminal device. That is, when BWP switching is implemented by using the DCI, the terminal device needs to simultaneously detect the DCI in two formats, and a quantity of detection times increases, thereby increasing power consumption of the terminal device.

### (2) Timer (timer)

After detecting control information in the BWP A, the terminal device may start a timer (timer). If no control information is detected in the BWP A in timing duration, the terminal device may switch to the BWP B. The BWP B may be understood as an initial BWP or a default BWP (default BWP), and the default BWP may be configured by the network device.

It may be understood that in this manner, even if the network device does not send control information to the terminal device any more within the timer, the terminal device still needs to determine, by continuously detecting the control information within the timer, whether to switch to the BWP B. Because the terminal device needs to continuously detect the control information, power consumption of detecting the control information by the terminal device increases.

For the foregoing problem that power consumption of the terminal device for detecting the control information is high because BWP switching is implemented by using the DCI or the timer, the embodiments of this application provide a data transmission method. Frequency band switching information is indicated by reusing a redundancy state of control information. That is, the control information may indicate configuration information, or may indicate control information for BWP switching. In this way, the terminal device can perform information configuration or BWP switching by receiving one type of DCI, and the terminal device does not need to detect DCI in two formats and continuously detect the control information in timing duration. This reduces power consumption of the terminal device and increase standby time of the terminal device.

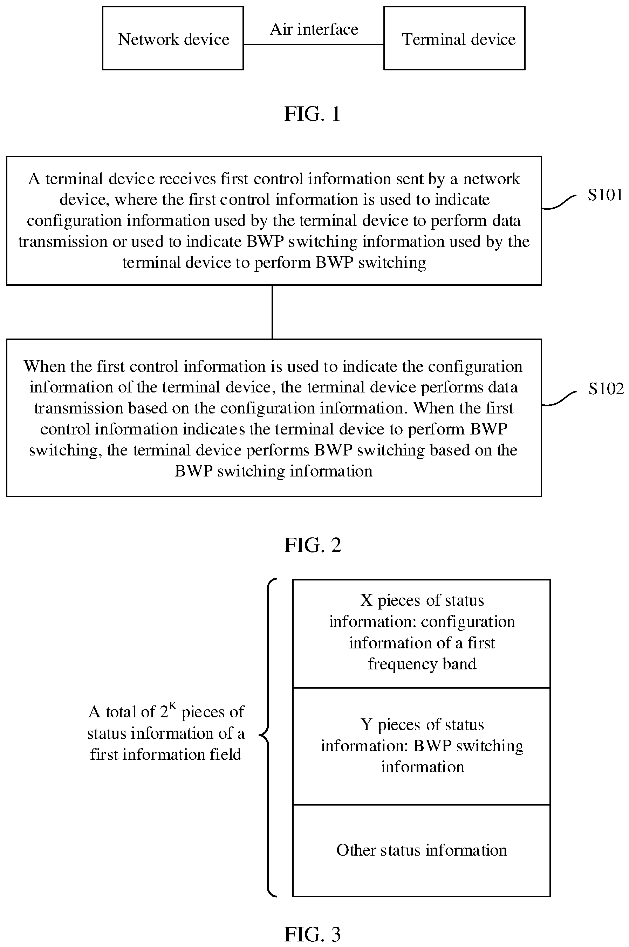

FIG. 1 is a schematic diagram of an applicable scenario of a data transmission method according to an embodiment of this application.

The data transmission method provided in this embodiment of this application may be applied to wireless communication systems, including a 4.5G or 5G wireless communication system, a further-evolved system based on LTE or NR, and a future wireless communication system. In addition, the method may be further applied to a wireless communication system including a terminal device having a low bandwidth capability. In the communication system used in the data transmission method provided in this embodiment of this application, a network device and a terminal device may be connected over an air interface.

It may be understood that the terminal device used in the data transmission method provided in this embodiment of this application may include a device that provides a user with voice and/or data connectivity, for example, include a handheld device having a wireless connection function or a processing device connected to a wireless modem. For example, the terminal device may be a terminal device supporting LTE communication, a terminal device supporting 5G communication, user equipment, or the like. In addition, a relay device (relay) and any other device that can perform data communication with the network device may be included in the terminal device described in this embodiment of this application.

It may be understood that the network device used in the data transmission method provided in this embodiment of this application may include an access network (access network, AN) device, for example, may be a device that is in an access network and that communicates with a wireless terminal device over an air interface through one or more cells. For example, the network device is a base station, and the base station includes an LTE eNB, a home evolved NodeB (home evolve NodeB, HeNB), a relay device, a femto cell (femto), a pico cell (pico), a 5G base station, or the like.

FIG. 2 is a schematic flowchart of a data transmission method according to an embodiment of this application. The data transmission method may include the following steps.

S101: A terminal device receives first control information sent by a network device, where the first control information is used to indicate configuration information used by the terminal device to perform data transmission or used to indicate BWP switching information used by the terminal device to perform BWP switching.

For ease of description, in this embodiment of this application, a frequency band on which data transmission between the terminal device and the network device is currently performed, a frequency band determined by the terminal device in a process of accessing the network device, or an active frequency band is referred to as a first BWP. The frequency band determined by the terminal device in the process of accessing the network device may be, for example, a frequency band on which the terminal device performs data transmission in an idle state (idle state) or in an inactive state (inactive state). In this embodiment of this application, the data transmission includes data receiving, data sending, or other information transmission. At least one other BWP that is configured by the network device for the terminal device and in which data transmission can be performed may be a second BWP.

It may be understood that the first BWP may be a minimum bandwidth that is of a frequency resource and that is needed for performing uplink data transmission or downlink data transmission between the network device and the terminal device, so that power consumption can be reduced in a data transmission process between the network device and the terminal device. A type of the first BWP is not limited in this embodiment, and the type described above is merely one possible type. For example, the first BWP may be a BWP in an NR system, for example, an initial BWP. Alternatively, the first BWP is a BWP corresponding to a minimum downlink bandwidth needed by the terminal device to access the network device. It may be understood that the initial BWP in the NR system may be a corresponding BWP in which the network device sends a necessary system information block type 1 (system information block type1, SIB1), a BWP corresponding to a control channel used by the network device to send the SIB 1, or a BWP corresponding to a data channel used by the network device to send the SIB 1. The bandwidth of the first BWP is described in detail below.

In an implementation, the first BWP may include a plurality of consecutive frequency resource units, and one frequency resource unit may be, for example, a resource block (resource block, RB).

In an implementation, the configuration information may include a plurality of types. For example, the configuration information in the BWP may include at least one of the following: a frequency position of the first BWP, the bandwidth of the first BWP, a numerology (numerology) used by the terminal device to perform data transmission with the network device in the first BWP, configuration information related to a PDCCH transmitted in the first BWP, and configuration information related to a physical uplink control channel (physical uplink control channel, PUCCH) transmitted in the first BWP.

It may be understood that the frequency position of the first BWP may be represented by a center frequency position of the first BWP, or represented by a start frequency position and/or an end frequency position of the first BWP. The frequency position of the first BWP may alternatively be represented in a plurality of manners. This is not limited in this application. In addition, the numerology may include a subcarrier spacing (subcarrier spacing, SCS) and/or a quantity of symbols included in a slot. The configuration information corresponding to the PDCCH may include at least one of the following: a range of a frequency resource for PDCCH transmission, a PDCCH candidate set, and an aggregation level (aggregation level, AL) corresponding to the PDCCH. The PDCCH candidate set may be represented by a search space (search space, SS) corresponding to the PDCCH. The aggregation level of the PDCCH may be understood as a size of a frequency resource used for transmission of one PDCCH, and may generally be represented by a quantity of minimum resource units needed for transmission of a control channel. For example, if a minimum resource unit needed for transmission of one PDCCH is represented by a control channel element (control channel element, CCE), the frequency resource for transmission of one PDCCH may be one CCE, two CCEs, four CCEs, eight CCEs, 16 CCEs, and the like. Correspondingly, the aggregation level AL may be 1, 2, 4, 8, or 16. The configuration information corresponding to the PUCCH may include at least one of the following: PUCCH format information and an uplink control information bit (bit) carried on the PUCCH.

For ease of understanding, some related concepts in this embodiment of this application are described as follows:
Downlink control channel: The downlink control channel is a channel used to carry downlink control information. The downlink control channel in this embodiment of this application may be an sPDCCH, an NR-PDCCH, or another channel that is newly defined in a future communication protocol and whose function is similar to the downlink control channel. The sPDCCH (short PDCCH or shortened PDCCH) is a downlink control channel occupying a time domain resource that is less than or equal to 0.5 ms. The NR-PDCCH (new radio PDCCH) is a downlink control channel defined in an NR system. A type and a name of the downlink control channel are not limited in this embodiment of this application, and all downlink control channels are collectively referred to as PDCCHs.

Aggregation level AL: The aggregation level is also referred to as an aggregation level, and may represent a quantity of consecutive CCEs occupied by one PDCCH. That is, one downlink control channel is obtained through aggregation of L downlink control channel elements (control channel elements, CCEs), where L is a positive integer. In this case, it may be described that the aggregation level of the PDCCH is L, and specifically a value of L may be 1, 2, 4, or 8. It should be noted that, to improve reliability of the PDCCH, the value of L may alternatively be 16 or 32.

CCE: One CCE may include n REGs, where n is a positive integer. For example, a value of n may be 3, 4, or 6.

Search space: The search space is a set of candidate downlink control channels, and may be understood as a set that is obtained by combining one or more candidate downlink control channels. Each candidate downlink control channel can be used to carry downlink control information. The terminal device needs to monitor a candidate downlink control channel. Therefore, the search space is a set of candidate downlink control channels that the terminal device monitors.

Control resource set (control-resource set, CORESET): The control resource set is a resource set used for transmission of downlink control information, and may also be referred to as a control resource area or a PDCCH resource set.

In an implementation, the terminal device may receive the first control information sent by the network device in a plurality of manners, for example, information received on a physical broadcast channel (physical broadcast channel, PBCH), information received by using radio resource control (radio resource control, RRC) signaling, information received by using media access control (medium access control, MAC) signaling, or information received on a PDCCH or a physical downlink shared channel (physical downlink shared channel, PDSCH). A manner in which the terminal device receives the first control information sent by the network device is not limited in this embodiment of this application.

It may be understood that the configuration information and frequency band switching indication information may be sent by the network device to the terminal device by using a first information field in the first control information, or it may be understood that a first information field is used to indicate the configuration information and/or frequency band switching. The first information field may be a field including a part of bits in one piece of DCI. The first control information may carry the configuration information or the BWP switching information of the terminal device in the first BWP. When the network device sends the first control information to the terminal device, the first control information sent each time has only one state. For example, when the network device sends the configuration information to the terminal device, status information presented by the first control information may be status information of the configuration information. In this case, the first control information cannot include BWP switching indication information. The configuration information and the BWP switching information may be specifically represented in the first control information in a plurality of manners. The following describes the configuration information and the BWP switching information in the first control information with reference to the accompanying drawings.

S102: When the first control information is used to indicate the configuration information, the terminal device performs data transmission based on the configuration information. When the first control information indicates the terminal device to perform BWP switching, the terminal device performs BWP switching based on the BWP switching information.

For ease of understanding, in this embodiment of this application, the configuration information that is related to the first BWP and that is configured by the network device for the terminal device is recorded as first configuration information, and the configuration information related to the second BWP is recorded as second configuration information.

In an implementation, as described above, the first configuration information may include at least one of the following: the frequency position of the first BWP, the bandwidth of the first BWP, the numerology used by the terminal device to perform data transmission with the network device in the first BWP, the configuration information related to the PDCCH for performing data transmission in the first BWP, the configuration information related to the PUCCH transmitted in the first BWP, and control information associated with data transmission, for example, scheduling information associated with data transmission. The scheduling information associated with data transmission may include at least one of the following: control information indicating a frequency resource used for data transmission, control information indicating a time domain resource for data transmission, control information indicating a modulation scheme, control information indicating a transport block size (transmission block size, TBS), and control information indicating a redundancy version (redundancy version, RV) corresponding to data transmission. It may be understood that the first configuration information may alternatively be control information included on a downlink control channel for scheduling data transmission.

It may be understood that the first control information may indicate the terminal device to perform BWP switching. Specifically, the first control information may indicate the terminal device to switch from a first BWP in which the terminal device is currently located or an active first BWP to the second BWP, or after the terminal device switches from the first BWP to the second BWP, the first control information may further indicate the terminal device to switch back from the second BWP to the first BWP. It may be understood that the first BWP in which the terminal device is currently located may be understood as a corresponding frequency band on which current data transmission between the terminal device and the network device is performed.

With reference to the accompanying drawings, the following describes in more detail a specific state that may be included in the first control information in the data transmission method provided in the embodiments of this application.

FIG. 3 is a schematic diagram of a representation manner of configuration information and BWP switching information in first control information according to an embodiment of this application.

The first control information may indicate the configuration information or the BWP switching information. For ease of understanding, assuming that the first control information includes K bits, the first control information may correspond to 2^{K} states in a binary system.

In an implementation, X states in the 2^{K} states corresponding to the first control information may represent first configuration information. For example, in the 2^{K} states, a 0^{th} state to an (X-1)^{th} state may be used to represent the first configuration information. The first configuration information may be configuration information of a first BWP in which a terminal device accesses a network device or performs data transmission with the network device. Y states in the 2^{K} states corresponding to the first control information may be used to indicate the terminal device to perform BWP switching. That is, when a state of the first control information is any one of the Y states, the terminal device may switch from the first BWP in which the terminal device is currently located to a second BWP based on BWP switching indicated by the first control information. Optionally, bandwidths of the first BWP and the second BWP are different; or a position of a frequency band resource corresponding to the first BWP is different from a position of a frequency band resource corresponding to the second BWP, and the frequency band resource corresponding to the first BWP partially overlaps the frequency band resource corresponding to the second BWP, or does not overlap the frequency band resource corresponding to the second BWP at all. In addition, the bandwidths of the first BWP and the second BWP may both be a bandwidth A, and the bandwidth A is a minimum bandwidth needed when the terminal device performs data transmission with the network device. It may be understood that the data transmission performed between the terminal device and the network device includes data transmission in a process in which the terminal device accesses the network device, and data transmission performed after the terminal device establishes a connection to the network device. The data transmission in the process in which the terminal device accesses the network device may be understood as data transmission between the terminal device and the network device in a process in which the terminal device enters an inactive state from an idle state, or data transmission between the terminal device and the network device in a process in which the terminal device enters a connected state from an idle state.

It may be understood that, in the 2^{K} states, the X states are all different from the Y states, that is, any one of the X states is different from any one of the Y states. In addition, both X and Y are integers greater than or equal to 0, and X+Y may be equal to 2^{K}, or X+Y may be less than 2^{K}. This is not limited in this application. It may be understood that first BWP switching information is used to indicate the terminal device to switch from the first BWP to the second BWP.

In an implementation, the Y states of the first control information may further include second configuration information, the first configuration information, or second BWP switching information, the second configuration information is configuration information of the terminal device in the second BWP, and the second BWP switching information is used to indicate the terminal device to switch from the second BWP to the first BWP. In other words, the Y states may be considered as a set, the set may be divided into a plurality of subsets, the plurality of subsets respectively include Y₁ states, Y₂ states, Y₂ states, and the like, and Y₁+Y₂+Y₃≤Y. Information separately indicated by the states is as follows: (1) In addition to indicating the first BWP switching information, the Y₁ states in the Y states may be further used to indicate the second configuration information. For example, in the 2^{K} states, if a 0^{th} state to an (X-1)^{th} state indicate the first configuration information, an X^{th} state to an (X+Y-1)^{th} state may be used to indicate the first BWP switching information. In this case, the Y states may be further specifically divided into: The X^{th} state to the (X+Y₁-1)^{th} state may be used to indicate the first BWP switching information and the second configuration information. (2) The Y₂ states in the Y states may be used to indicate both the first BWP switching information and the first configuration information. For example, in the 2^{K} states, an (X+Y₁)^{th} state to an (X+Y₁+Y₂-1)^{th} state may be used to indicate the first BWP switching information and the first configuration information. In this case, a value range corresponding to the Y₂ states in the 2^{K} states is (X+Y₁) to (X+Y₁+Y₂-1). (3) The Y₃ states in the Y states may be used to indicate the first BWP switching information, the second configuration information, and the second BWP switching information. For example, in the 2^{K} states, an (X+Y₁+Y₂)^{th} state to an (X+Y₁+Y₂+Y₃-1)^{th} state may be used to indicate the first BWP switching information, the second configuration information, and the second BWP switching information. In this case, a value range corresponding to the Y₃ states is (X+Y₁+Y₂) to (X+Y₁+Y₂+Y₃-1). It may be understood that the value ranges of the foregoing states in the 2^{K} states are merely examples. The configuration information and the frequency band switching information included in the first control information may be another combination other than the foregoing enumerated combinations. This is not limited in this application.

In an example, as shown in Table 1, 2^{K} types of status information of the first control information may correspond to different numbers, for example, 0 to (2^{K}-1). Each number corresponds to different status information. In this case, a quantity of pieces of status information whose number value range is within a first range may be X, and the X pieces of status information are used to indicate the first configuration information; and a quantity of pieces of status information whose number value range is within a second range may be Y, and the Y pieces of status information are used to indicate the first BWP switching information or used to indicate the first BWP switching information and other information. That the Y pieces of status information are used to indicate the first BWP switching information or used to indicate the first BWP switching information and other information may be understood as that each type of status information in the Y pieces of status information corresponds to the first BWP switching information; each type of status information in the Y pieces of status information corresponds to the first BWP switching information and other information; or in the Y pieces of status information, some status information corresponds to the first BWP switching information, and some status information corresponds to the first BWP switching information and other information.

**Table 1**

| Number range of status information | Quantity of pieces of corresponding status information | Specific meaning |
|---|---|---|
| First value range | X | First configuration information |
| Second value range | Y | First BWP switching information, or first BWP switching information and other information |

In addition to indicating the first BWP switching information, the Y pieces of status information may further indicate other information. The other information herein may be the second configuration information, the first configuration information, the second BWP switching information, or any combination of the foregoing three types of information.

In another example, as shown in Table 2, 2^{K} types of status information of the first control information may correspond to different numbers, for example, 0 to (2^{K}-1). Each number corresponds to different status information. In this case, a quantity of pieces of status information whose number value range is within a first range may be X, and the X pieces of status information are used to indicate the first configuration information; and a quantity of pieces of status information whose number value range is within a second range may be Y₁, and the Y₁ pieces of status information are used to indicate the first BWP switching information and the second configuration information. It may be understood that the second value range described in Table 2 may be different from the second value range described in Table 1. The second value range corresponding to numbers of the Y₁ pieces of status information in Table 2 is a subset of a value range corresponding to numbers of the Y pieces of status information. That is, the Y pieces of status information may further include other status information except the Y₁ pieces of status information, and numbers of the other status information may be a third value range.

**Table 2**

| Number range of status information | Corresponding status information | Specific meaning |
|---|---|---|
| First value range | X pieces of status information | First configuration information |
| Second value range | Y₁ pieces of status information | First BWP switching information and second configuration information |
| Third value range | In the Y pieces of status information, other status information except the Y₁ pieces of status information | First BWP switching information, or first BWP switching information and other information |

In addition to indicating the first BWP switching information, the Y pieces of status information may further indicate other information. The other information herein may be the second configuration information, the first configuration information, the second BWP switching information, or any combination of the foregoing three types of information.

In still another example, as shown in Table 3, 2^{K} types of status information of the first control information may correspond to different numbers, for example, 0 to (2^{K}-1). Each number corresponds to different status information. In this case, a quantity of pieces of status information whose number value range is within a first range may be X, and the X pieces of status information are used to indicate the first configuration information; a quantity of pieces of status information whose number value range is within a second range may be Y₁, and the Y₁ pieces of status information are used to indicate the first BWP switching information and the second configuration information; and a quantity of pieces of status information whose number value range is within a third value range may be Y2, and the Y2 pieces of status information are used to indicate the first BWP switching information and the first configuration information. It may be understood that the third value range described in Table 3 may be different from the third value range described in Table 2. For example, in a specific implementation, the third value range described in Table 3 may be a subset of the third value range described in Table 2. Similarly, in specific implementations, fourth value ranges in the following Table 4 and Table 3 may be different. In addition, both the second value range and the third value range in Table 3 are subsets of a value range corresponding to numbers of the Y pieces of status information. That is, the Y pieces of status information may further include other status information except the Y₁ pieces of status information and the Y₂ pieces of status information, and numbers of the other status information may be a fourth value range.

**Table 3**

| Number range of status information | Corresponding status information | Specific meaning |
|---|---|---|
| First value range | X pieces of status information | First configuration information |
| Second value range | Y₁ pieces of status information | First BWP switching information and second configuration information |
| Third value range | Y₂ pieces of status information | First BWP switching information and first configuration information |
| Fourth value range | In the Y pieces of status information, other status information except the Y₁ pieces of status information and the Y₂ pieces of status information | First BWP switching information, or first BWP switching information and other information |

In addition to indicating the first BWP switching information, the Y pieces of status information may further indicate other information. The other information herein may be the second configuration information, the first configuration information, the second BWP switching information, or any combination of the foregoing three types of information.

In still another example, as shown in Table 4, 2^{K} types of status information of the first control information may correspond to different numbers, for example, 0 to (2^{K}-1). Each number corresponds to different status information. In this case, a quantity of pieces of status information whose number value range is within a first range may be X, and the X pieces of status information are used to indicate the first configuration information; a quantity of pieces of status information whose number value range is within a second range may be Y₁, and the Y₁ pieces of status information are used to indicate the first BWP switching information and the second configuration information; a quantity of pieces of status information whose number value range is within a third value range may be Y₂, and the Y₂ pieces of status information are used to indicate the first BWP switching information and the first configuration information; and a quantity of pieces of status information whose number value range is within a fourth value range may be Y₃, and the Y₃ pieces of status information are used to indicate the first BWP switching information and the second BWP switching information. It may be understood that the fourth value range described in Table 4 may be different from the fourth value range described in Table 3. The second value range, the third value range, and the fourth value range in Table 4 are all subsets of a value range corresponding to numbers of the Y pieces of status information. That is, the Y pieces of status information may further include other status information except the Y ₁ pieces of status information, the Y₂ pieces of status information, and the Y₃ pieces of status information, and numbers of the other status information may be a fifth value range.

**Table 4**

| Number range of status information | Corresponding status information | Specific meaning |
|---|---|---|
| First value range | X pieces of status information | First configuration information |
| Second value range | Y₁ pieces of status information | First BWP switching information and second configuration information |
| Third value range | Y₂ pieces of status information | First BWP switching information and first configuration information |
| Fourth value range | Y₃ pieces of status information | First BWP switching information and second BWP switching information |
| Fifth value range | In the Y pieces of status information, other status information except the Y₁ pieces of status information, the Y₂ pieces of status information, and the Y₃ pieces of status information | First BWP switching information, or first BWP switching information and other information |

In addition to indicating the first BWP switching information, the Y pieces of status information may further indicate other information. The other information herein may be the second configuration information, the first configuration information, the second BWP switching information, or any combination of the foregoing three types of information.

Generally, the 2^{K} states of the first control information may include the X states used to indicate the first configuration information and the Y states used to indicate the first BWP switching. On a basis that the Y states include the first BWP switching indication information, the Y states may further specifically include one or more of the second configuration information, the first configuration information, and the second BWP switching information. For example, all of the Y states are used to indicate the first BWP switching; or some of the Y states are used to indicate the first BWP switching, and some of the Y states are used to indicate one or more of the first BWP switching, the second configuration information, the first configuration information, and the second BWP switching information. It may be understood that switching performed by the terminal device from the first BWP to different second BWPs may correspond to different states.

In an implementation, after switching from the first BWP to the second BWP based on the BWP switching indicated by the first control information, the terminal device may further receive the second configuration information sent by the network device, and the second configuration information is configuration information related to the second BWP. The second configuration information may include at least one of the following: a frequency position of the second BWP, a bandwidth of the second BWP, a numerology used by the terminal device to perform data transmission with the network device in the second BWP, configuration information related to a PDCCH for performing data transmission in the second BWP, configuration information related to a PUCCH transmitted in the second BWP, and control information associated with data transmission, for example, scheduling information associated with data transmission. The scheduling information associated with data transmission may include at least one of the following: control information indicating a frequency resource used for data transmission, control information indicating a time domain resource for data transmission, control information indicating a modulation scheme, control information indicating a transport block size, and control information indicating a redundancy version corresponding to data transmission. It may be understood that the first configuration information may alternatively be control information included on a downlink control channel for scheduling data transmission.

It may be understood that the frequency position of the second BWP may be represented by a center frequency position of the second BWP, or represented by a start frequency position and/or an end frequency position of the second BWP. The frequency position of the second BWP may alternatively be represented in a plurality of manners. This is not limited in this application. In addition, the numerology may include an SCS. The configuration information corresponding to the PDCCH may include at least one of the following: a range of a frequency resource for PDCCH transmission, a PDCCH candidate set, and an AL corresponding to the PDCCH. The PDCCH candidate set may be represented by an SS corresponding to the PDCCH. The aggregation level of the PDCCH may be understood as a size of a frequency resource used for transmission of one PDCCH, and may generally be represented by a quantity of minimum resource units needed for transmission of a control channel. For example, if a minimum resource unit needed for transmission of one PDCCH is represented by a CCE, the frequency resource for transmission of one PDCCH may be one CCE, two CCEs, four CCEs, eight CCEs, 16 CCEs, and the like. Correspondingly, the aggregation level AL may be 1, 2, 4, 8, or 16. The configuration information corresponding to the PUCCH may include at least one of the following: PUCCH format information and an uplink control information bit carried on the PUCCH.

It may be understood that the terminal device may obtain the first configuration information and the second configuration information through a same physical transmission channel or by using same signaling. For example, both the first configuration information and the second configuration information are carried in same RRC signaling.

It may be understood that various states that may be indicated by the first control information may be implemented through joint coding, and the first control information cannot simultaneously indicate a plurality of states. For example, the first control information cannot simultaneously indicate the first configuration information represented by the X states, and the first BWP switching information and the second configuration information that are represented by the Y states. It may be understood that the network device may send a plurality of pieces of first control information to the terminal device, and specific states of the plurality of pieces of first control information may be different, to indicate the terminal to perform different operations.

According to the data transmission method provided in this embodiment of this application, the first control information may be used to indicate the configuration information or the BWP switching information, and the terminal device may obtain the configuration information or the BWP switching information by detecting only the first control information. This avoids a problem of high power consumption and a high latency in performing frequency band switching that are caused by the terminal device detecting DCI in a plurality of formats or keeping enabling detection in timing duration.

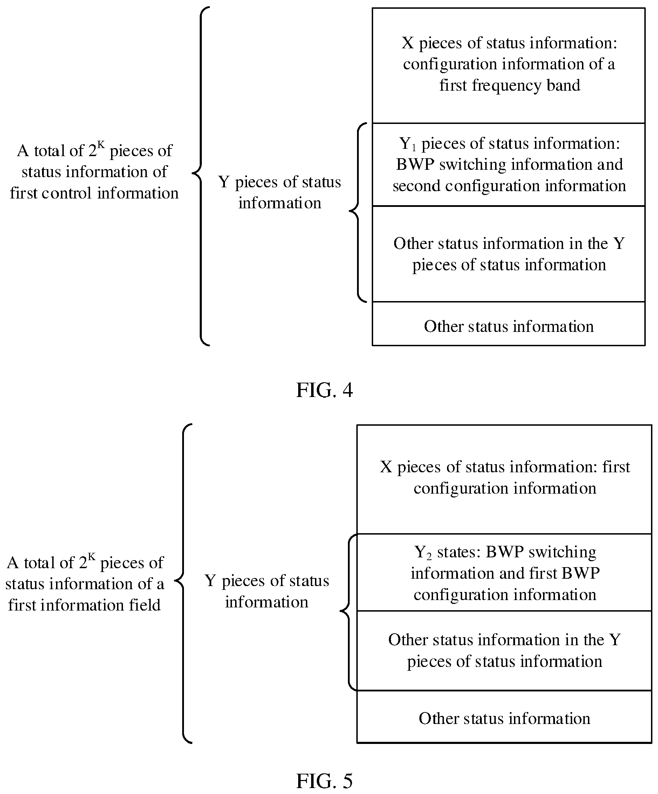

FIG. 4 is a schematic diagram of another representation manner of configuration information and BWP switching information in first control information according to an embodiment of this application.

The first control information may indicate first configuration information or indicate the BWP switching information and the second configuration information. For ease of understanding, assuming that the first control information includes K bits, the first control information may correspond to 2^{K} states in a binary system.

In an implementation, X states in the 2^{K} states corresponding to the first control information may represent the first configuration information, and the first configuration information may be configuration information of a first BWP in which a terminal device accesses a network device or performs data transmission with the network device. Y states in the 2^{K} states corresponding to the first control information may be used to indicate first BWP switching information for the terminal device to perform BWP switching, and Y₁ pieces of status information in the Y₁ pieces of status information may be used to indicate both the first BWP switching information and the second configuration information. That is, when a state of the first control information is one of the Y₁ states, the terminal device may switch from the first BWP in which the terminal device is currently located to a second BWP based on the BWP switching information indicated by the first control information, and perform data transmission in the second BWP based on the second configuration information. Optionally, bandwidths of the first BWP and the second BWP are different; or a position of a frequency band resource corresponding to the first BWP is different from a position of a frequency band resource corresponding to the second BWP, and the frequency band resource corresponding to the first BWP partially overlaps the frequency band resource corresponding to the second BWP, or does not overlap the frequency band resource corresponding to the second BWP at all. In addition, the bandwidths of the first BWP and the second BWP may both be a bandwidth A, and the bandwidth A is a minimum bandwidth needed when the terminal device performs data transmission with the network device. It may be understood that the data transmission performed between the terminal device and the network device includes data transmission in a process in which the terminal device accesses the network device, and data transmission performed after the terminal device establishes a connection to the network device. The data transmission in the process in which the terminal device accesses the network device may be understood as data transmission between the terminal device and the network device in a process in which the terminal device enters an inactive state from an idle state, or data transmission between the terminal device and the network device in a process in which the terminal device enters a connected state from an idle state.

It may be understood that Y₁ is a positive integer less than Y. To be specific, the foregoing Y pieces of status information may further include other status information. In addition to indicating the first BWP switching information, the other status information may further indicate the first configuration information, second BWP switching information, a combination thereof, and the like. It may be further understood that in the Y states, an information type indicated by the other status information needs to be different from an information type indicated by the Y₁ pieces of status information. For example, the Y₁ pieces of status information are used to indicate both the first BWP switching information and the second configuration information, and in this case, the other status information does not include status information used to indicate both the first BWP switching information and the second configuration information. In other words, in this embodiment of this application, the status information used to indicate both the first BWP switching information and the second configuration information has been completely included in the Y₁ pieces of status information.

In an implementation, the second configuration information is information associated with the data transmission in the second BWP after the terminal device performs switching. For example, the terminal device may determine, based on the first control information, that a corresponding state is one of the Y₁ pieces of status information, switch from the current first BWP to the second BWP based on the first BWP switching information indicated by the status information, and further perform, based on the second configuration information, data transmission with the network device in the second BWP that is switched to.

It may be understood that, in the 2^{K} states, the X states are all different from the Y states, that is, any one of the X states is different from any one of the Y states. In addition, both X and Y are integers greater than or equal to 0, and X+Y may be equal to 2^{K}, or X+Y may be less than 2^{K}. This is not limited in this application.

In an implementation, after switching from the first BWP to the second BWP based on the BWP switching indicated by the first control information, the terminal device may further receive the second configuration information sent by the network device, and the second configuration information is configuration information related to the second BWP. An information type included in the second configuration information or a manner in which the terminal device obtains the second configuration information is similar to that of the first configuration information. To avoid repetition, details are not described herein again.

It may be understood that the terminal device may obtain the first configuration information and the second configuration information through a same physical transmission channel or by using same signaling. For example, both the first configuration information and the second configuration information are carried in same RRC signaling.

It may be understood that various states that may be indicated by the first control information may be implemented through joint coding, and each piece of first control information sent by the network device to the terminal device cannot simultaneously indicate a plurality of states. For example, the first control information cannot simultaneously indicate the first configuration information represented by the X states, and the first BWP switching information and the second configuration information that are represented by the Y states. In other words, the first control information can indicate only one state at a time. The state may indicate the configuration information or the BWP switching information of the terminal device in the first BWP based on different requirements. It may be understood that the network device may send a plurality of pieces of first control information to the terminal device, and specific states of the plurality of pieces of first control information may be different, to indicate the terminal to perform different operations.

It may be understood that bandwidths of the first BWP and the second BWP may be minimum bandwidths that are of frequency resources and that are needed when the network device performs uplink data transmission or downlink data transmission with the terminal device, so that power consumption can be reduced in a data transmission process between the network device and the terminal device. For example, the first BWP may be a BWP in an NR system, for example, an initial BWP. Alternatively, the first BWP is a BWP corresponding to a minimum downlink bandwidth needed by the terminal device to access the network device. It may be understood that the initial BWP in the NR system may be a corresponding BWP in which the network device sends a necessary SIB 1, a BWP corresponding to a control channel used by the network device to send the SIB 1, or a BWP corresponding to a data channel used by the network device to send the SIB 1. The bandwidth of the first BWP is described in detail below.

In an implementation, the first BWP may include a plurality of consecutive frequency resource units, and one frequency resource unit may be, for example, an RB.

In an implementation, the configuration information may include a plurality of types. For example, the configuration information in the BWP may include at least one of the following: a frequency position of the first BWP, the bandwidth of the first BWP, a numerology used by the terminal device to perform data transmission with the network device in the first BWP, configuration information related to a PDCCH for performing data transmission in the first BWP, and configuration information related to a PUCCH transmitted in the first BWP.

It may be understood that the frequency position of the first BWP may be represented by a center frequency position of the first BWP, or represented by a start frequency position and/or an end frequency position of the first BWP. The frequency position of the first BWP may alternatively be represented in a plurality of manners. This is not limited in this application. In addition, the numerology may include an SCS. The configuration information corresponding to the PDCCH may include at least one of the following: a range of a frequency resource for PDCCH transmission, a PDCCH candidate set, and an AL corresponding to the PDCCH. The PDCCH candidate set may be represented by an SS corresponding to the PDCCH. The aggregation level of the PDCCH may be understood as a size of a frequency resource used for transmission of one PDCCH, and may generally be represented by a quantity of minimum resource units needed for transmission of a control channel. For example, if a minimum resource unit needed for transmission of one PDCCH is represented by a CCE, the frequency resource for transmission of one PDCCH may be one CCE, two CCEs, four CCEs, eight CCEs, 16 CCEs, and the like. Correspondingly, the aggregation level AL may be 1, 2, 4, 8, or 16. The configuration information corresponding to the PUCCH may include at least one of the following: PUCCH format information and an uplink control information bit carried on the PUCCH.

In an implementation, the terminal device may receive the first control information sent by the network device in a plurality of manners, for example, information carried on a PBCH, information received by using RRC signaling, information received by using MAC signaling, or information received on a PDCCH or a PDSCH. A manner in which the terminal device receives the first control information sent by the network device is not limited in this embodiment of this application.

It may be understood that the configuration information and frequency band switching indication information may be sent by the network device to the terminal device by using a first information field in the first control information, or it may be understood that a first information field is used to indicate the configuration information and/or frequency band switching. The first information field may be a field including a part of bits in one piece of DCI. The first control information may carry the configuration information or the BWP switching information of the terminal device in the first BWP, and the configuration information and the BWP switching information may not be simultaneously carried or represented by the first control information. In other words, when the network device sends the first control information to the terminal device, the first control information sent each time has only one state. For example, when the network device sends the configuration information to the terminal device, status information presented by the first control information may be status information of the configuration information. In this case, the first control information cannot include BWP switching indication information.

According to the data transmission method provided in this embodiment of this application, the first control information may be used to indicate the configuration information or the BWP switching information, and the terminal device may obtain the configuration information or the BWP switching information by detecting only the first control information. This avoids a problem of high power consumption and a high latency in performing frequency band switching that are caused by the terminal device detecting DCI in a plurality of formats or keeping enabling detection in timing duration.

FIG. 5 is a schematic diagram of still another representation manner of configuration information and BWP switching information in first control information according to an embodiment of this application.

The first control information may indicate the configuration information or indicate the BWP switching information and first configuration information. For ease of understanding, assuming that the first control information includes K bits, the first control information may correspond to 2^{K} states in a binary system.

In an implementation, X states in the 2^{K} states corresponding to the first control information may represent the first configuration information, and the first configuration information may be configuration information of a first BWP in which a terminal device accesses a network device or performs data transmission with the network device. Y states in the 2^{K} states corresponding to the first control information may be used to indicate the first BWP for the terminal device to perform BWP switching. The Y pieces of status information may further specifically include Y₂ pieces of status information, and the Y₂ pieces of status information are used to indicate both the first BWP configuration information and the first configuration information. When a state of the first control information is one of the Y₂ states, the terminal device may perform data transmission with the network device on a first frequency band based on the first configuration information indicated by the first control information, and then switch, based on the first BWP switching information, from the first BWP in which the terminal device is currently located to a second BWP. Optionally, bandwidths of the first BWP and the second BWP are different; or a position of a frequency band resource corresponding to the first BWP is different from a position of a frequency band resource corresponding to the second BWP, and the frequency band resource corresponding to the first BWP partially overlaps the frequency band resource corresponding to the second BWP, or does not overlap the frequency band resource corresponding to the second BWP at all. In addition, both the first BWP and the second BWP are minimum bandwidths that satisfy a bandwidth requirement in a process in which the terminal device accesses the network device or performs data transmission with the network device. The bandwidths of the first BWP and the second BWP may both be a bandwidth A, and the bandwidth A is a minimum bandwidth needed when the terminal device performs data transmission with the network device. It may be understood that the data transmission performed between the terminal device and the network device includes data transmission in a process in which the terminal device accesses the network device, and data transmission performed after the terminal device establishes a connection to the network device. The data transmission in the process in which the terminal device accesses the network device may be understood as data transmission between the terminal device and the network device in a process in which the terminal device enters an inactive state from an idle state, or data transmission between the terminal device and the network device in a process in which the terminal device enters a connected state from an idle state.

It may be understood that Y₂ is a positive integer less than or equal to Y. To be specific, the foregoing Y pieces of status information may further include other status information. In addition to indicating the first BWP switching information, the other status information may further indicate the first configuration information, the second BWP switching information, a combination thereof, and the like. It may be further understood that in the Y states, an information type indicated by the other status information needs to be not completely the same as an information type indicated by the Y₂ pieces of status information. For example, the Y₂ pieces of status information are used to indicate both the first BWP switching information and the first configuration information, and in this case, the other status information no longer includes status information used to indicate both the first BWP switching information and the first configuration information. In other words, in this embodiment of this application, the status information used to indicate both the first BWP switching information and the first configuration information has been completely included in the Y₂ pieces of status information.

It may be understood that, in the 2^{K} states, the X states are all different from the Y states, that is, any one of the X states is different from any one of the Y states. In addition, both X and Y are integers greater than or equal to 0, and X+Y may be equal to 2^{K}, or X+Y may be less than 2^{K}. This is not limited in this application.

In an implementation, the first control information may indicate the first configuration information by using one of the X states of the first control information. Alternatively, the first control information may indicate the BWP switching information and the first configuration information by using one of the Y states of the first control information. When the first control information indicates the first configuration information, after receiving the first control information, the terminal device may perform information configuration based on the first configuration information in the first control information, and access the network device or perform data transmission with the network device. When the first control information indicates the BWP switching information and the first configuration information, after receiving the first control information, the terminal device may perform information configuration related to the first BWP based on the first configuration information in the first control information to perform data transmission with the network device, and switch from the first BWP to the second BWP based on the BWP switching information.

In an implementation, after switching from the first BWP to the second BWP based on the BWP switching indicated by the first control information, the terminal device may further receive the second configuration information sent by the network device, and the second configuration information is configuration information related to the second BWP. An information type included in the second configuration information or a manner in which the terminal device obtains the second configuration information is similar to that of the first configuration information. To avoid repetition, details are not described herein again.

It may be understood that the first BWP may be a minimum bandwidth that is of a frequency resource and that is needed for performing uplink data transmission or downlink data transmission between the network device and the terminal device, so that power consumption can be reduced in a data transmission process between the network device and the terminal device. For example, the first BWP may be a BWP in an NR system, for example, an initial BWP. Alternatively, the first BWP is a BWP corresponding to a minimum downlink bandwidth needed by the terminal device to access the network device. It may be understood that the initial BWP in the NR system may be a corresponding BWP in which the network device sends a necessary SIB 1, a BWP corresponding to a control channel used by the network device to send the SIB 1, or a BWP corresponding to a data channel used by the network device to send the SIB 1. The bandwidth of the first BWP is described in detail below.

In an implementation, the first BWP may include a plurality of consecutive frequency resource units, and one frequency resource unit may be, for example, an RB.

In an implementation, the configuration information may include a plurality of types. For example, the configuration information in the BWP may include at least one of the following: a frequency position of the first BWP, the bandwidth of the first BWP, a numerology used by the terminal device to perform data transmission with the network device in the first BWP, configuration information related to a PDCCH for performing data transmission in the first BWP, and configuration information related to a PUCCH transmitted in the first BWP.

It may be understood that the frequency position of the first BWP may be represented by a center frequency position of the first BWP, or represented by a start frequency position and/or an end frequency position of the first BWP. The frequency position of the first BWP may alternatively be represented in a plurality of manners. This is not limited in this application. In addition, the numerology may include an SCS. The configuration information corresponding to the PDCCH may include at least one of the following: a range of a frequency resource for PDCCH transmission, a PDCCH candidate set, and an AL corresponding to the PDCCH. The PDCCH candidate set may be represented by an SS corresponding to the PDCCH. The aggregation level of the PDCCH may be understood as a size of a frequency resource used for transmission of one PDCCH, and may generally be represented by a quantity of minimum resource units needed for transmission of a control channel. For example, if a minimum resource unit needed for transmission of one PDCCH is represented by a CCE, the frequency resource for transmission of one PDCCH may be one CCE, two CCEs, four CCEs, eight CCEs, 16 CCEs, and the like. Correspondingly, the aggregation level AL may be 1, 2, 4, 8, or 16. The configuration information corresponding to the PUCCH may include at least one of the following: PUCCH format information and an uplink control information bit carried on the PUCCH.

In an implementation, the terminal device may receive the first control information sent by the network device in a plurality of manners, for example, information carried on a PBCH, information received by using RRC signaling, information received by using MAC signaling, or information received on a PDCCH or a PDSCH. A manner in which the terminal device receives the first control information sent by the network device is not limited in this embodiment of this application.

It may be understood that the terminal device may obtain the first configuration information and the second configuration information through a same physical transmission channel or by using same signaling. For example, both the first configuration information and the second configuration information are carried in same RRC signaling.

It may be understood that various states that may be indicated by the first control information may be considered to be implemented through joint coding, and each piece of first control information sent by the network device to the terminal device cannot simultaneously indicate a plurality of states. For example, the first control information cannot simultaneously indicate the first configuration information represented by the X states, and the first BWP switching information and the second configuration information that are represented by the Y states. In other words, the first control information can indicate only one state at a time. The state may indicate the configuration information or the BWP switching information of the terminal device in the first BWP based on different requirements. It may be understood that the network device may send a plurality of pieces of first control information to the terminal device, and specific states of the plurality of pieces of first control information may be different, to indicate the terminal to perform different operations.

According to the data transmission method provided in this embodiment of this application, the first control information may be used to indicate the configuration information or indicate both the BWP switching information and the configuration information, and the terminal device may obtain the configuration information or obtain both the BWP switching information and the configuration information by detecting only the first control information. This avoids a problem of high power consumption caused by the terminal device detecting DCI in a plurality of formats or keeping enabling detection in timing duration.

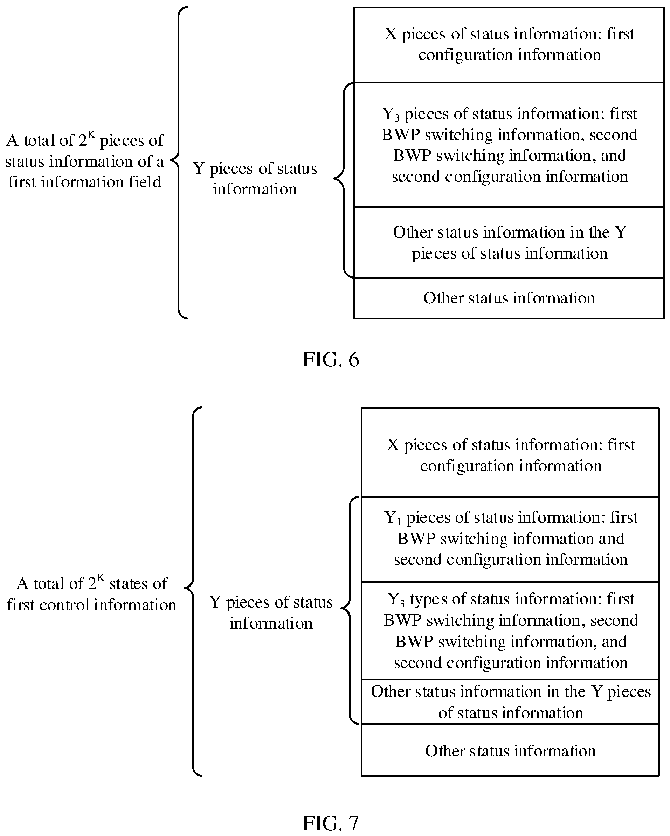

FIG. 6 is a schematic diagram of still another representation manner of configuration information and BWP switching information in first control information according to an embodiment of this application.

The first control information may indicate the configuration information or indicate the BWP switching information and second configuration information. For ease of understanding, assuming that the first control information includes K bits, the first control information may correspond to 2^{K} states in a binary system.

In an implementation, X states in the 2^{K} states of the first control information may be used to indicate first configuration information, and the first configuration information may be configuration information in a first BWP when a terminal device accesses a network device or performs data transmission with the network device. Y states in the 2^{K} states corresponding to the first control information may be used to indicate first BWP switching information, and the Y pieces of status information may specifically include Y₃ pieces of status information. The Y₃ pieces of status information are used to simultaneously indicate the first BWP switching information, the second configuration information, and second BWP switching information. The first BWP switching information is used to indicate the terminal device to switch from a current first BWP to a second BWP. Second BWP indication information may be used to indicate the terminal device to switch back from the second BWP to the first BWP or switch from the second BWP to another BWP after switching to the second BWP. In other words, when a state of the first control information is one of the Y₃ states, the terminal device may switch from the first BWP in which the terminal device is currently located to the second BWP based on the first BWP switching information indicated by the first control information, switch back from the second BWP to the first BWP based on the second BWP switching information indicated by the first control information, or perform data transmission with the network device in the second BWP based on the second configuration information indicated by the first control information. Bandwidths of the first BWP and the second BWP are different, and both the first BWP and the second BWP are minimum bandwidths that satisfy a bandwidth requirement in a process in which the terminal device accesses the network device or performs data transmission with the network device.

It may be understood that Y₃ is a positive integer less than or equal to Y. To be specific, the foregoing Y pieces of status information may further include other status information. In addition to indicating the first BWP switching information, the other status information may further indicate the first configuration information, the second BWP switching information, the second configuration information, a combination thereof, and the like. It may be further understood that in the Y states, an information type indicated by the other status information needs to be not completely the same as an information type indicated by the Y₃ pieces of status information. For example, the Y₃ pieces of status information are used to simultaneously indicate the first BWP switching information, the second BWP switching information, and the second configuration information, and in this case, the other status information no longer includes status information used to simultaneously indicate the first BWP switching information, the second BWP switching information, and the second configuration information. In other words, in this embodiment of this application, the status information used to indicate both the first BWP switching information and the first configuration information has been completely included in the Y₃ pieces of status information.

It may be understood that, in the 2^{K} states, the X states are all different from the Y states, that is, any one of the X states is different from any one of the Y states. In addition, both X and Y are integers greater than or equal to 0, and X+Y may be equal to 2^{K}, or X+Y may be less than 2^{K}. This is not limited in this application.

In an implementation, the first control information may indicate the first configuration information by using one of the X states of the first control information. Alternatively, the first control information may indicate the BWP switching information and the second configuration information by using one of the Y states of the first control information. When the first control information indicates the first configuration information, after receiving the first control information, the terminal device may perform information configuration based on the first configuration information in the first control information, and access the network device or perform data transmission with the network device. When the first control information indicates the BWP switching information and the second configuration information, after receiving the first control information, the terminal device may perform information configuration related to the second BWP based on the second configuration information in the first control information to perform data transmission with the network device.

It may be understood that the first BWP and the second BWP may be minimum bandwidths that are of frequency resources and that are needed for performing uplink data transmission or downlink data transmission between the network device and the terminal device, so that power consumption can be reduced in a data transmission process between the network device and the terminal device. For example, the first BWP may be a BWP in an NR system, for example, an initial BWP. Alternatively, the first BWP is a BWP corresponding to a minimum downlink bandwidth needed by the terminal device to access the network device. It may be understood that the initial BWP in the NR system may be a corresponding BWP in which the network device sends a necessary SIB 1, a BWP corresponding to a control channel used by the network device to send the SIB 1, or a BWP corresponding to a data channel used by the network device to send the SIB 1. The bandwidth of the first BWP is described in detail below.

In an implementation, the first BWP may include a plurality of consecutive frequency resource units, and one frequency resource unit may be, for example, an RB.

In an implementation, the configuration information may include a plurality of types. For example, the configuration information in the BWP may include at least one of the following: a frequency position of the first BWP, the bandwidth of the first BWP, a numerology used by the terminal device to perform data transmission with the network device in the first BWP, configuration information related to a PDCCH for performing data transmission in the first BWP, and configuration information related to a PUCCH transmitted in the first BWP.

It may be understood that the frequency position of the first BWP may be represented by a center frequency position of the first BWP, or represented by a start frequency position and/or an end frequency position of the first BWP. The frequency position of the first BWP may alternatively be represented in a plurality of manners. This is not limited in this application. In addition, the numerology may include an SCS. The configuration information corresponding to the PDCCH may include at least one of the following: a range of a frequency resource for PDCCH transmission, a PDCCH candidate set, and an AL corresponding to the PDCCH. The PDCCH candidate set may be represented by an SS corresponding to the PDCCH. The aggregation level of the PDCCH may be understood as a size of a frequency resource used for transmission of one PDCCH, and may generally be represented by a quantity of minimum resource units needed for transmission of a control channel. For example, if a minimum resource unit needed for transmission of one PDCCH is represented by a CCE, the frequency resource for transmission of one PDCCH may be one CCE, two CCEs, four CCEs, eight CCEs, 16 CCEs, and the like. Correspondingly, the aggregation level AL may be 1, 2, 4, 8, or 16. The configuration information corresponding to the PUCCH may include at least one of the following: PUCCH format information and an uplink control information bit carried on the PUCCH.

In an implementation, the terminal device may receive the first control information sent by the network device in a plurality of manners, for example, information carried on a PBCH, information received by using RRC signaling, information received by using MAC signaling, or information received on a PDCCH or a PDSCH. A manner in which the terminal device receives the first control information sent by the network device is not limited in this embodiment of this application.

It may be understood that various states that may be indicated by the first control information may be considered to be implemented through joint coding, and the first control information cannot simultaneously indicate a plurality of states. For example, the first control information cannot simultaneously indicate the first configuration information represented by the X states, and the first BWP switching information and the second configuration information that are represented by the Y states. In other words, the first control information can indicate only one state at a time. The state may indicate the configuration information or the BWP switching information of the terminal device in the first BWP based on different requirements. It may be understood that the network device may send a plurality of pieces of first control information to the terminal device, and specific states of the plurality of pieces of first control information may be different, to indicate the terminal to perform different operations.

According to the data transmission method provided in this embodiment of this application, the first control information may be used to indicate the configuration information or indicate both the BWP switching information and the configuration information, and the terminal device may obtain the configuration information or obtain both the BWP switching information and the configuration information by detecting only the first control information. This avoids a problem of high power consumption caused by the terminal device detecting DCI in a plurality of formats or keeping enabling detection in timing duration.

FIG. 7 is a schematic diagram of still another representation manner of configuration information and BWP switching information in first control information according to an embodiment of this application.

It can be learned from FIG. 7 that the first control information provided in this embodiment of this application includes X pieces of status information and Y pieces of status information. The X pieces of status information are used to indicate first configuration information, that is, a terminal device may perform data transmission with a network device in a first BWP based on the first configuration information. The Y pieces of status information are used to indicate first BWP switching information, that is, the terminal device may switch from the first BWP to a second BWP based on any one of the Y pieces of status information. In addition, the Y pieces of status information may be further divided more specifically. To be specific, the Y pieces of status information may further include Y₁ pieces of status information used to simultaneously indicate the first BWP switching and Y₃ pieces of status information used to simultaneously indicate the first BWP switching information, second BWP switching information, and second configuration information.

Y₁+Y₃ is less than or equal to Y.

It may be understood that various states that may be indicated by the first control information may be implemented through joint coding, and the first control information cannot simultaneously indicate a plurality of states. For example, the first control information cannot simultaneously indicate the first configuration information represented by the X states, and the first BWP switching information and the second configuration information that are represented by the Y states. In other words, the first control information can indicate only one state at a time. The state may indicate the configuration information or the BWP switching information of the terminal device in the first BWP based on different requirements. It may be understood that the network device may send a plurality of pieces of first control information to the terminal device, and specific states of the plurality of pieces of first control information may be different, to indicate the terminal to perform different operations.

In an implementation, the terminal device may determine, based on the first control information, that a corresponding state is one of the Y₃ states, then first switch from the first BWP in which the terminal device is currently located to the second BWP based on an indication of the state, and then, in the second BWP, perform data transmission with the network device in the second BWP based on one of detected N states (the second configuration information). In an implementation, after ensuring correct data transmission, the terminal device switches back from the second BWP to the first BWP based on one of the N states.

It may be understood that the first control information provided in this embodiment of this application may be control information included in FB DCI, for example, control information included in a DCI format 0_0 or a DCI format 1_0. In this application, the control information included in the DCI format 0_0 or the DCI format 1_0 may be further understood as that transmission of the control information is performed by using the DCI format 0_0 or the DCI format 1_0. The Y states included in the first control information may reuse redundancy status information of the FB DCI. In addition, Y₁, Y₂, and Y₃ that are specifically included in the Y states and that are enumerated in this embodiment of this application are merely examples and are not exhaustive. The Y states may further include a plurality of other types of configuration information or BWP band switching information, and combinations thereof. This is not limited in this application.

The correct data transmission in this embodiment of this application may include: If the terminal device sends uplink data to the network device, the terminal device can determine that the uplink data is correctly received only after receiving an acknowledgement (acknowledgement, ACK) corresponding to the uplink data sent by the network device. Alternatively, if the terminal device receives downlink data sent by the network device, the network device can determine that the downlink data is correctly received only after receiving an ACK sent by the terminal device for the downlink data. It may be understood that, in this embodiment of this application, after the terminal device sends the uplink data to the network device, all data that is sent by the network device and that can enable the terminal device to confirm that the network device correctly receives the uplink data may be considered as an ACK. On the other hand, after the network device sends the downlink data, all data that is sent by the terminal device and that can enable the network device to confirm that the terminal device correctly receives the downlink data may be considered as an ACK.

In an implementation, in this embodiment of this application, time in which the terminal device switches back from the second BWP to the first BWP may be set by default. For example, after the terminal device completes data transmission with the network device in the second BWP based on one of the Y₃ states, the terminal device may switch back to the first BWP. Alternatively, time in which the terminal device switches back from the second BWP to the first BWP may be indicated by a state in the first control information. This is not limited in this application.

In an implementation, the time of switching back from the second BWP to the first BWP may alternatively be indicated by the first control information. For example, when the first control information indicates the terminal device to switch from the first BWP to the second BWP, the first control information may also indicate specific time in which the terminal device switches back from the second BWP to the first BWP.

It may be understood that, after the time in which the terminal device switches back from the second BWP to the first BWP is indicated, and the terminal device switches to the second BWP, the terminal device does not need to detect control information of the terminal device within a timer, then switches to another BWP after the timer ends, and may determine duration for performing data transmission with the network device in the second BWP only by using a control state in the first control information, to avoid that the terminal device always detects the control information within the timer (even if the network device does not schedule control information to be sent to the terminal device within the timer). This reduces power consumption consumed by the terminal device for completing BWP switching, thereby achieving an objective of power saving.

In addition, according to the data transmission method provided in this embodiment of this application, the terminal device may simultaneously implement data transmission and/or BWP switching by using the first control information in the first BWP. Therefore, DCI formats in two formats do not need to be simultaneously detected as that in a conventional technology. Further, a process of BWP switching performed by the terminal device is simplified, implementation complexity of BWP switching performed by the terminal device is reduced, and power consumption consumed by the terminal device for completing BWP switching is reduced, thereby achieving the objective of power saving.

For ease of understanding, in the data transmission method provided in this embodiment of this application, the terminal does not need to detect two or more DCI formats, but implements information configuration or BWP switching by using the first control information in one DCI format.

An example in which the first control information is frequency domain resource allocation information is used for description. It is assumed that a maximum bandwidth of the terminal device is 5 MHz, and if an SCS used when the terminal device performs data transmission is 15 kHz, a maximum quantity of RBs that may be used simultaneously for data transmission between the terminal device and the network device is 25. Downlink data transmission is used as an example. When a resource allocation manner of the downlink data transmission between the terminal device and the network device is a resource allocation manner of consecutive frequency domains per RB, according to a current protocol and based on a maximum quantity of RBs that can be used, it may be determined that a quantity of bits used to indicate frequency domain resource allocation information is 9. However, there are actually a total of 25*(25+1)/2=325 consecutive frequency domain resource allocation solutions, and nine bits have a total of 512 states in binary. Therefore, other states except 325 of the 512 states may be used to indicate other information except the first configuration information, for example, information corresponding to the Y states, specifically, BWP switching information, or second configuration information and BWP switching information, or BWP repeat switching information, or second configuration information and BWP repeat switching information, or the like. The indication of the first information may correspond to 325 of the 512 states. Table 5 below shows an implementation. In addition to indicating frequency domain resource allocation, the first control information may further indicate first BWP switching. It may be understood that, in this application, the first BWP switching may alternatively be represented as the first BWP switching information, and second BWP switching may alternatively be represented as the second BWP switching information.

**Table 5**

| State of the first control information | Second BWP index (index) after switching |
|---|---|
| 111111111 | 0 |
| 111111110 | 1 |
| 111111101 | 2 |
| 111111100 | 3 |

In another implementation, the first control information includes K bits, and the first control information corresponds to one type of status information in 2^{K} states. It is assumed that X is not greater than (2^{K}-1) and Y is not greater than (2^{K}-1), whether the first control information indicates one type of status information in the X states or one type of status information in the Y states may be distinguished by using a value of a most significant bit (bit) of the K bits. For example, assuming that K=9, if bits corresponding to the first control information are 0xxxxxxxx, the first control information indicates one type of status information in the X states; on the other hand, if bits corresponding to the first control information are 1xxxxxxxx, the first control information indicates one type of status information in the Y states, where x represents one bit, and a value of the bit is 0 or 1.

It should be noted that in this embodiment of this application, in the first BWP, to further reduce power consumption of the terminal device, the terminal device may be limited to detect only an FB DCI format in the first BWP for terminal device-specific scheduling information, and does not need to detect a non-FB DCI format. In this implementation of this application, the terminal device may determine the scheduling information and the BWP switching information by detecting DCI in only one format. Therefore, the terminal device is limited to detecting only the FB DCI format in the first BWP. This not only reduces complexity of detecting DCI by the terminal device, thereby reducing power consumption of the terminal device, but also ensures implementation of data scheduling and BWP switching functions.

In addition, optionally, in the second BWP, to further reduce power consumption of the terminal device, the terminal device may be limited to detect only non-FB DCI in the second BWP for terminal device-specific scheduling information, and a quantity of pieces of DCI detected by the terminal device is limited. This can reduce power consumption of the terminal device.

In addition, in this embodiment of this application, transmission parameters corresponding to physical downlink channels used for transmission of the first control information may be limited. This reduces power consumption of the terminal device for detecting the first control information. The corresponding transmission parameters herein include a quantity of configured CORESETs, a quantity of search spaces, a quantity of blind detection times, an aggregation level, and the like. The physical downlink channels herein include a PDCCH and a PDSCH.

It may be understood that the first BWP, the second BWP, and the like in this embodiment of this application may be a minimum bandwidth that can be used to implement data transmission in a process in which the terminal device accesses the network device or the terminal device performs data transmission with the network device. The possible bandwidth of the first BWP is described in more detail with reference to the accompanying drawings.

In an implementation, when the terminal device is in a network access process, the bandwidth of the first BWP in which the terminal device is located may be equal to a minimum downlink bandwidth needed for the terminal device to access the network device. An NR system is used as an example. A minimum downlink bandwidth needed for accessing a network may be understood as an additional transmission bandwidth corresponding to a downlink signal or downlink information and a necessary guard bandwidth that need to be obtained by the terminal device for accessing the NR system. Alternatively, a minimum downlink bandwidth needed for accessing the network device may be only downlink information or a downlink signal that needs to be obtained by the terminal device for accessing the NR system, and does not include a necessary guard bandwidth. To access the NR system, at least the following downlink information or downlink signal need to be obtained.

### (1) Synchronization signal block (synchronization signal block, SSB)

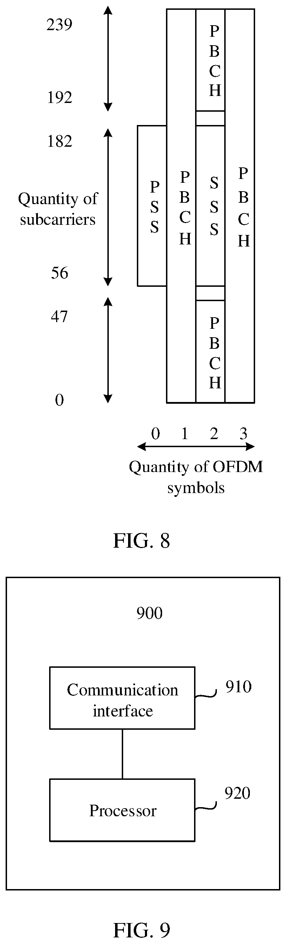

As shown in FIG. 8, the SSB includes a primary synchronization signal (primary synchronization signal, PSS), a secondary synchronization signal (secondary synchronization signal, SSS), and a PBCH. The SSB occupies four orthogonal frequency division multiplexing (orthogonal frequency division multiplexing, OFDM) symbols in time. Transmission of the PSS and the SSS is separately performed on the first OFDM symbol and the third OFDM symbol. Corresponding transmission bandwidths are 12 resource blocks (resource blocks, RBs) (more precisely, the transmission bandwidths of the PSS and the SSS correspond to 127 subcarriers). Transmission of information included in the PBCH is performed on the second symbol, the third symbol, and the fourth symbol, where on the second OFDM symbol and the fourth OFDM symbol, a transmission bandwidth is 20 RBs (corresponding to 240 subcarriers), and on the third OFDM symbol, a transmission bandwidth is eight RBs (corresponding to 96 subcarriers).

It may be understood that, with reference to FIG. 2, a transmission bandwidth corresponding to an SSB is 20 RBs, and one RB includes 12 subcarriers. Therefore, transmission bandwidths corresponding to an SSB are different based on different subcarrier spacings SCSs. Table 6 shows transmission bandwidths corresponding to an SSB at several different subcarrier spacings.

**Table 6**

| | | | | |
|---|---|---|---|---|
| SCS/kHz | 15 | 30 | 120 | 240 |
| SSB transmission bandwidth/MHz | 3.6 | 7.2 | 28.8 | 57.6 |

### (2) Necessary system information (SI)

The necessary SI in the data transmission method provided in this embodiment of this application may be understood as minimum system information that the terminal device needs to obtain before initiating random access to the network device. For example, in the NR system, the terminal device may determine, by using control information on the PBCH, control information for scheduling a SIB 1, and then determine the SIB 1 by using the control information for scheduling the SIB 1 (which is SIB 1 control information for short below). The SIB 1 includes necessary information, for example, a random access preamble (preamble), needed by the terminal device to initiate random access to the terminal device. For ease of description, the necessary system information in this embodiment of this application may be represented by the SIB 1.

In conclusion, because the terminal device may separately receive the SSB and the SIB 1 at different moments, a maximum value between a transmission bandwidth corresponding to the SSB and a transmission bandwidth corresponding to the SIB 1 may be used as a minimum bandwidth available for accessing the NR system. Further, if the terminal device obtains the SIB 1, the terminal device needs to first read the SIB 1 control information, and then determine the SIB 1 based on the SIB 1 control information. In this case, the transmission bandwidth corresponding to the SIB 1 may be represented by a transmission bandwidth corresponding to the SIB 1 control information or the transmission bandwidth corresponding to the SIB 1. For example, the SIB 1 control information is carried on the PDCCH, and the SIB 1 is carried on the PDSCH. In this case, the transmission bandwidth corresponding to the SIB 1 may be represented by a transmission bandwidth corresponding to the PDCCH carrying the SIB 1 control information or a transmission bandwidth corresponding to the PDSCH carrying the SIB 1.

In an implementation, if there are a plurality of transmission bandwidths corresponding to the SIB 1, a maximum value between a minimum transmission bandwidth corresponding to the SIB 1 and the transmission bandwidth corresponding to the SSB may be used as the minimum bandwidth available for accessing the NR system. For example, when a subcarrier spacing corresponding to the SSB and a subcarrier spacing corresponding to the PDCCH including the SIB 1 control information are both 15 kHz, the transmission bandwidth corresponding to the SIB 1 control information may be 24 RBs, 48 RBs, or 96 RBs. Herein, to determine the minimum bandwidth available for accessing the NR system, 24 RBs (4.32 MHz) may be used as the minimum transmission bandwidth corresponding to the SIB 1. Considering that the transmission bandwidth corresponding to the SSB is 20 RBs (3.6 MHz), the minimum bandwidth needed for accessing the NR system can be understood as 4.32 MHz. For another example, when a subcarrier spacing corresponding to the SSB is 30 kHz and a subcarrier spacing corresponding to the PDCCH including the SIB 1 control information is 15 kHz, the transmission bandwidth corresponding to the SIB 1 control information may be 48 RBs, or may be 96 RBs. Similarly, to determine the minimum bandwidth available for accessing the NR system, 48 RBs (8.64 MHz) may be used as the minimum transmission bandwidth corresponding to the SIB 1. Considering that the transmission bandwidth corresponding to the SSB is 20 RBs (7.2 MHz), the minimum bandwidth available for accessing the NR system may be understood as 8.64 MHz.

It should be noted that the SIB 1 control information may alternatively be carried on another physical layer channel, for example, an enhanced physical downlink control channel (enhanced physical downlink control channel, EPDCCH). The SIB 1 may alternatively be carried on another physical layer channel. This is not limited in this application.

In an example, the first BWP may be, for example, an initial BWP in the current NR system. The initial BWP may be understood as a BWP corresponding to the SIB 1 sent by the network device. Further, the initial BWP may be a BWP corresponding to a control channel used by the network device to send the SIB 1, or a BWP corresponding to a data channel used by the network device to send the SIB 1. It may be understood that the control channel used by the network device to send the SIB 1 may include a control channel of control information for scheduling the SIB 1, and the control channel may be, for example, a PDCCH. More specifically, the terminal device may determine, by receiving the PBCH sent by the network device, a control channel configuration for scheduling the SIB 1, determine, based on control channel configuration information of the SIB 1, scheduling control information for scheduling the SIB 1, and determine the SIB 1 based on the scheduling control information. If a BWP corresponding to the control channel for scheduling the SIB 1 indicated by indication information included in the PBCH is represented by a CORESET #0, the initial BWP may be understood as the CORESET #0.

In another example, a bandwidth of the first BWP may be less than a bandwidth of another BWP. For example, in addition to the first BWP, the network device may further configure another BWP. Compared with the bandwidth of the another BWP, the bandwidth of the first BWP is at least not greater than the bandwidth of the another BWP. Specifically, the bandwidth of the first BWP may be less than the bandwidth of the another BWP.

It may be understood that generally, a smaller bandwidth indicates smaller power consumption of the terminal device. Therefore, when the first BWP is the initial BWP or the bandwidth of the first BWP is less than the bandwidth of the another BWP, complexity of detecting control information by the terminal device in the first BWP may be reduced, thereby reducing power consumption of the terminal device.

In addition, PDCCH configuration information corresponding to the first BWP may also be limited. The PDCCH configuration information is as described above. By limiting the PDCCH configuration information, complexity of detecting control information by the terminal device may be further reduced, and power consumption may be reduced. The control information herein may be, for example, control information including the first control information described above.

It may be understood that complexity of detecting the control information by the terminal device in the first BWP is lower than complexity of detecting the control information by the terminal device in another BWP. From this perspective, the first BWP may also be understood as an energy saving BWP.

FIG. 9 is a schematic diagram of a structure of a terminal device according to an embodiment of this application. The terminal device 900 includes a communication interface 910 and a processor 920.

In an implementation, the communication interface 910 may be configured to receive, in a first BWP, first control information sent by a network device, where the first control information is used to indicate configuration information used by the terminal device to perform data transmission or used to indicate bandwidth part BWP switching information used by the terminal device to perform BWP switching.

Optionally, the processor 920 may be configured to: when the first control information indicates the configuration information, perform data transmission based on the configuration information; or when the first control information indicates the BWP switching information, perform BWP switching based on the BWP switching information.

In an implementation, that the first control information is used to indicate configuration information used by the terminal device to perform data transmission or used to indicate BWP switching information used by the terminal device to perform BWP switching includes: the first control information includes K bits, and the first control information corresponds to one type of status information in 2^{K} states corresponding to the K bits where X pieces of status information in the 2^{K} types of status information are used to indicate the configuration information, Y pieces of status information in the 2^{K} types of status information are used to indicate the BWP switching information, the X pieces of status information are all different from the Y pieces of status information, and X+Y≤2^{K}.

In an implementation, the Y pieces of status information in the first control information are used to indicate first BWP switching information, the first BWP switching information is used to indicate the terminal device to switch from a first BWP to a second BWP, and the second BWP is different from the first BWP; and the X pieces of status information in the first control information are used to indicate first configuration information, and the first configuration information is used by the terminal device to perform data transmission in the first BWP.

In an implementation, Y₁ pieces of status information in the Y pieces of status information are further used to indicate second configuration information, and the second configuration information is used by the terminal device to perform data transmission in the second BWP.

In an implementation, Y₂ pieces of status information in the Y pieces of status information are further used to indicate the first configuration information.

In an implementation, the first control information further includes N states, Y₃ pieces of status information in the Y pieces of status information are further used to indicate second BWP switching information, and the second BWP switching information is used to indicate the terminal device to switch from the second BWP to the first BWP.

In an implementation, a bandwidth of the first BWP is a minimum bandwidth needed for obtaining downlink data in a process in which the terminal device accesses the network device; or a bandwidth of the first BWP is a minimum bandwidth needed for a process in which the terminal device performs data transmission with the network device.

In an implementation, the first BWP is a corresponding BWP in which the terminal device receives necessary system information sent by the network device; the first BWP is a BWP corresponding to a data channel or a control channel used when the terminal device receives necessary system information sent by the network device; or the bandwidth of the first BWP is less than or equal to a bandwidth of at least one second BWP, and both the first BWP and the at least one second BWP are BWPs configured by the network device for the terminal device.

In an implementation, when the terminal device performs data transmission with the network device, the configuration information is corresponding frequency resource allocation information.

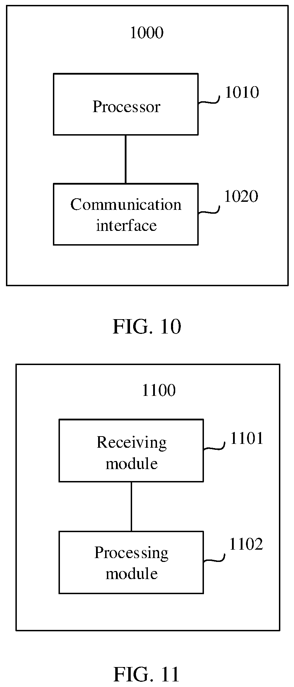

FIG. 10 is a schematic diagram of a structure of a network device according to an embodiment of this application. The network device 1000 includes a processor 1010 and a communication interface 1020.

In an implementation, the processor 1010 may be configured to determine first control information, where the first control information is used to indicate configuration information used by a terminal device to perform data transmission or used to indicate BWP switching information used by the terminal device to perform BWP switching.

In an implementation, the communication interface 1020 may be configured to send the first control information to the terminal device.

In an implementation, that the first control information is used to indicate configuration information used by a terminal device to perform data transmission or used to indicate BWP switching information used by the terminal device to perform BWP switching includes: the first control information includes K bits, and the first control information corresponds to one type of status information in 2^{K} states corresponding to the K bits where X pieces of status information in the 2^{K} types of status information are used to indicate the configuration information, Y pieces of status information in the 2^{K} types of status information are used to indicate the BWP switching information, the X pieces of status information are all different from the Y pieces of status information, and X+Y≤2^{K}.

In an implementation, the Y pieces of status information in the first control information are used to indicate first BWP switching information, the first BWP switching information is used to indicate the terminal device to switch from a first BWP to a second BWP, and the second BWP is different from the first BWP; and the X pieces of status information in the first control information are used to indicate first configuration information, and the first configuration information is used by the terminal device to perform data transmission in the first BWP.

In an implementation, Y₁ pieces of status information in the Y pieces of status information are further used to indicate second configuration information, and the second configuration information is used by the terminal device to perform data transmission in the second BWP.

In an implementation, Y₂ pieces of status information in the Y pieces of status information are further used to indicate the first configuration information.

In an implementation, the first control information further includes N states, Y₃ pieces of status information in the Y pieces of status information are further used to indicate second BWP switching information, and the second BWP switching information is used to indicate the terminal device to switch from the second BWP to the first BWP.

In an implementation, a bandwidth of the first BWP is a minimum bandwidth needed for obtaining downlink data in a process in which the terminal device accesses the network device; or a bandwidth of the first BWP is a minimum bandwidth needed for a process in which the terminal device performs data transmission with the network device.

In an implementation, the first BWP is a corresponding BWP in which the terminal device receives necessary system information sent by the network device; the first BWP is a BWP corresponding to a data channel or a control channel used when the terminal device receives necessary system information sent by the network device; or the bandwidth of the first BWP is less than or equal to a bandwidth of at least one second BWP, and both the first BWP and the at least one second BWP are BWPs configured by the network device for the terminal device.

In an implementation, when the terminal device performs data transmission with the network device, the configuration information is corresponding frequency resource allocation information.

FIG. 11 is a schematic diagram of a structure of a terminal device according to an embodiment of this application. The terminal device 1100 includes a receiving module 1101 and a processing module 1102.

In an implementation, the receiving module 1102 may be configured to receive first control information sent by a network device, where the first control information is used to indicate configuration information used by the terminal device to perform data transmission or used to indicate bandwidth part BWP switching information used by the terminal device to perform BWP switching.

In an implementation, the processing module 1102 may be configured to: when the first control information is used to indicate the configuration information, perform data transmission based on the configuration information.

In an implementation, the processing module may be further configured to: when the first control information is used to indicate the BWP switching information, perform BWP switching based on the BWP switching information.

In an implementation, that the first control information is used to indicate configuration information used by the terminal device to perform data transmission or used to indicate BWP switching information used by the terminal device to perform BWP switching includes: the first control information includes K bits, and the first control information corresponds to one type of status information in 2^{K} states corresponding to the K bits where X pieces of status information in the 2^{K} types of status information are used to indicate the configuration information, Y pieces of status information in the 2^{K} types of status information are used to indicate the BWP switching information, the X pieces of status information are all different from the Y pieces of status information, and X+Y≤2^{K}.

In an implementation, the Y pieces of status information in the first control information are used to indicate first BWP switching information, the first BWP switching information is used to indicate the terminal device to switch from a first BWP to a second BWP, and the second BWP is different from the first BWP; and the X pieces of status information in the first control information are used to indicate first configuration information, and the first configuration information is used by the terminal device to perform data transmission in the first BWP.

In an implementation, Y₁ pieces of status information in the Y pieces of status information are further used to indicate second configuration information, and the second configuration information is used by the terminal device to perform data transmission in the second BWP.

In an implementation, Y₂ pieces of status information in the Y pieces of status information are further used to indicate the first configuration information.

In an implementation, the first control information further includes N states, Y₃ pieces of status information in the Y pieces of status information are further used to indicate second BWP switching information, and the second BWP switching information is used to indicate the terminal device to switch from the second BWP to the first BWP.

In an implementation, a bandwidth of the first BWP is a minimum bandwidth needed for obtaining downlink data in a process in which the terminal device accesses the network device; or a bandwidth of the first BWP is a minimum bandwidth needed for a process in which the terminal device performs data transmission with the network device.

In an implementation, the first BWP is a corresponding BWP in which the terminal device receives necessary system information sent by the network device; the first BWP is a BWP corresponding to a data channel or a control channel used when the terminal device receives necessary system information sent by the network device; or the bandwidth of the first BWP is less than or equal to a bandwidth of at least one second BWP, and both the first BWP and the at least one second BWP are BWPs configured by the network device for the terminal device.

In an implementation, when the terminal device performs data transmission with the network device, the configuration information is corresponding frequency resource allocation information.

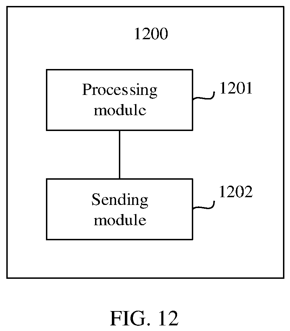

FIG. 12 is a schematic diagram of a structure of a network device according to an embodiment of this application. The terminal device 1200 includes a processing module 1201 and a sending module 1202.

In an implementation, the processing module 1201 may be configured to determine first control information, where the first control information is used to indicate configuration information used by a terminal device to perform data transmission or used to indicate BWP switching information used by the terminal device to perform BWP switching.

In an implementation, the sending module 1202 may be configured to send the first control information to the terminal device.

In an implementation, that the first control information is used to indicate configuration information used by a terminal device to perform data transmission or used to indicate BWP switching information used by the terminal device to perform BWP switching includes: the first control information includes K bits, and the first control information corresponds to one type of status information in 2^{K} states corresponding to the K bits where X pieces of status information in the 2^{K} types of status information are used to indicate the configuration information, Y pieces of status information in the 2^{K} types of status information are used to indicate the BWP switching information, the X pieces of status information are all different from the Y pieces of status information, and X+Y≤2^{K}.

In an implementation, the Y pieces of status information in the first control information are used to indicate first BWP switching information, the first BWP switching information is used to indicate the terminal device to switch from a first BWP to a second BWP, and the second BWP is different from the first BWP; and the X pieces of status information in the first control information are used to indicate first configuration information, and the first configuration information is used by the terminal device to perform data transmission in the first BWP.

In an implementation, Y₁ pieces of status information in the Y pieces of status information are further used to indicate second configuration information, and the second configuration information is used by the terminal device to perform data transmission in the second BWP.

In an implementation, Y₂ pieces of status information in the Y pieces of status information are further used to indicate the first configuration information.

In an implementation, the first control information further includes N states, Y₃ pieces of status information in the Y pieces of status information are further used to indicate second BWP switching information, and the second BWP switching information is used to indicate the terminal device to switch from the second BWP to the first BWP.

In an implementation, a bandwidth of the first BWP is a minimum bandwidth needed for obtaining downlink data in a process in which the terminal device accesses the network device; or a bandwidth of the first BWP is a minimum bandwidth needed for a process in which the terminal device performs data transmission with the network device.

In an implementation, the first BWP is a corresponding BWP in which the terminal device receives necessary system information sent by the network device; the first BWP is a BWP corresponding to a data channel or a control channel used when the terminal device receives necessary system information sent by the network device; or the bandwidth of the first BWP is less than or equal to a bandwidth of at least one second BWP, and both the first BWP and the at least one second BWP are BWPs configured by the network device for the terminal device.

In an implementation, when the terminal device performs data transmission with the network device, the configuration information is corresponding frequency resource allocation information.

It may be understood that the terminal device and the network device shown in FIG. 11 and FIG. 12 may be configured to perform the method in any one of the foregoing embodiments.

It may be understood that in the embodiments of this application, "B corresponding to A" indicates that B is associated with A, and B may be determined based on A. However, it may be further understood that determining A based on B does not mean that B is determined based only on A. That is, B may also be determined based on A and/or other information.

It may be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In a plurality of embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (random access memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A data transmission method, comprising:
receiving (S101), by a terminal device, first control information sent by a network device, wherein the first control information indicates configuration information used by the terminal device to perform data transmission or indicates bandwidth part, BWP, switching information used by the terminal device to perform BWP switching;
when (S102) the first control information indicates the configuration information, performing, by the terminal device, data transmission based on the configuration information; or
when (S102) the first control information indicates the BWP switching information, performing, by the terminal device, BWP switching based on the BWP switching information,
wherein that the first control information indicates configuration information used by the terminal device to perform data transmission or indicates BWP switching information used by the terminal device to perform BWP switching comprises:
the first control information comprises K bits, the first control information corresponds to one type of status information in 2^{K} states corresponding to the K bits, and K is a positive integer, wherein
X pieces of status information in the 2^{K} types of status information is used to indicate the configuration information used by the terminal device to perform data transmission, Y pieces of status information in the 2^{K} types of status information is used to indicate the BWP switching information, the X pieces of status information are all different from the Y pieces of status information, both X and Y are positive integers, and X+Y≤2^{K}.

2. The method according to claim 1, wherein the Y pieces of status information in the first control information indicate first BWP switching information, the first BWP switching information indicates the terminal device to switch from a first BWP to a second BWP, and the second BWP is different from the first BWP;
the X pieces of status information in the first control information indicate first configuration information, and the first configuration information is used by the terminal device to perform data transmission in the first BWP.

3. The method according to claim 2, wherein Y₁ pieces of status information in the Y pieces of status information further indicate second configuration information, the second configuration information is used by the terminal device to perform data transmission in the second BWP, and Y₁ is a positive integer.

4. The method according to claim 2 or 3, wherein Y₂ pieces of status information in the Y pieces of status information further indicate the first configuration information, and Y₂ is a positive integer.

5. The method according to any one of claims 2 to 4, wherein Y₃ pieces of status information in the Y pieces of status information further indicate second BWP switching information, the second BWP switching information indicates the terminal device to switch from the second BWP to the first BWP, and Y₃ is a positive integer.

6. The method according to any one of claims 2 to 5, wherein a bandwidth of the first BWP is a minimum bandwidth needed for obtaining downlink data in a process in which the terminal device accesses the network device; or
a bandwidth of the first BWP is a minimum bandwidth needed for a process in which the terminal device performs data transmission with the network device.

7. A data transmission method, comprising:
determining, by a network device (1000), first control information, wherein the first control information indicates configuration information used by a terminal device to perform data transmission or indicates BWP switching information used by the terminal device to perform BWP switching; and
sending, by the network device, the first control information to the terminal device,
wherein that the first control information indicates configuration information of the terminal device or indicates BWP switching information used by the terminal device to perform BWP switching comprises:
the first control information comprises K bits, the first control information corresponds to one of 2^{K} types of status information corresponding to the K bits, and K is a positive integer, wherein
X pieces of status information in the 2^{K} types of status information is used to indicate the configuration information used by the terminal device to perform data transmission, Y pieces of status information in the 2^{K} types of status information is used to indicate the BWP switching information, the X pieces of status information are all different from the Y pieces of status information, both X and Y are positive integers, and X+Y≤2^{K}.

8. The method according to claim 7, wherein the Y pieces of status information in the first control information indicate first BWP switching information, the first BWP switching information indicates the terminal device to switch from a first BWP to a second BWP, and the first BWP is different from the second BWP;
the X pieces of status information in the first control information indicate first configuration information, and the first configuration information is used by the terminal device to perform data transmission in the first BWP.

9. The method according to claim 8, wherein Y₁ pieces of status information in the Y pieces of status information further indicate second configuration information, the second configuration information is used by the terminal device to perform data transmission in the second BWP, and Y₁ is a positive integer.

10. The method according to claim 8 or 9, wherein Y₂ pieces of status information in the Y pieces of status information further indicate the first configuration information, and Y₂ is a positive integer.

11. The method according to any one of claims 8 to 10, wherein Y₃ pieces of status information in the Y pieces of status information further indicate second BWP switching information, the second BWP switching information indicates the terminal device to switch from the second BWP to the first BWP, and Y₃ is a positive integer.

12. The method according to any one of claims 8 to 11, wherein a bandwidth of the first BWP is a minimum bandwidth needed for obtaining downlink data in a process in which the terminal device accesses the network device; or
a bandwidth of the first BWP is a minimum bandwidth needed for a process in which the terminal device performs data transmission with the network device.

13. A communication device, wherein the communication device is configured to perform the method according to any one of claims 1 to 6, or the communication device is configured to perform the method according to any one of claims 7 to 12.

## Patentansprüche

1. Datenübertragungsverfahren, umfassend:
Empfangen (S101) von ersten Steuerinformationen, die durch eine Netzwerkvorrichtung gesendet wurden, durch eine Endgerätevorrichtung, wobei die ersten Steuerinformationen Konfigurationsinformationen angeben, die durch die Endgerätevorrichtung zum Durchführen von Datenübertragung verwendet werden, oder Bandbreiten-Part- (bandwidth part, BWP-) Umschaltinformationen angeben, die durch die Endgerätevorrichtung zum Durchführen von BWP-Umschaltung verwendet werden;
wenn (S102) die ersten Steuerinformationen die Konfigurationsinformationen angeben, Durchführen von Datenübertragung durch die Endgerätevorrichtung basierend auf den Konfigurationsinformationen; oder
wenn (S102) die ersten Steuerinformationen die BWP-Umschaltinformationen angeben, Durchführen von BWP-Umschaltung durch die Endgerätevorrichtung basierend auf den BWP-Umschaltinformationen,
wobei, dass die ersten Steuerinformationen Konfigurationsinformationen angeben, die durch die Endgerätevorrichtung zum Durchführen von Datenübertragung verwendet werden, oder BWP-Umschaltinformationen angeben, die durch die Endgerätevorrichtung zum Durchführen von BWP-Umschaltung verwendet werden, Folgendes umfasst:
die ersten Steuerinformationen umfassen K Bits, die ersten Steuerinformationen entsprechen einer Art von Statusinformationen in 2^{K} Zuständen, die den K Bits entsprechen, und K ist eine positive Ganzzahl, wobei
X Statusinformationselemente in den 2^{K} Arten von Statusinformationen verwendet werden, um die Konfigurationsinformationen anzugeben, die durch die Endgerätevorrichtung zum Durchführen von Datenübertragung verwendet werden; Y Statusinformationselemente in den 2^{K} Arten von Statusinformationen verwendet werden, um die BWP-Umschaltinformationen anzugeben; sich die X Statusinformationselemente alle von den Y Statusinformationselementen unterscheiden; sowohl X als auch Y positive Ganzzahlen sind; und X+Y≤2^{K}.

2. Verfahren nach Anspruch 1, wobei die Y Statusinformationselemente in den ersten Steuerinformationen erste BWP-Umschaltinformationen angeben, die ersten BWP-Umschaltinformationen die Endgerätevorrichtung anweisen, von einem ersten BWP auf ein zweites BWP umzuschalten, und sich das zweite BWP von dem ersten BWP unterscheidet;
die X Statusinformationselemente in den ersten Steuerinformationen erste Konfigurationsinformationen angeben und die ersten Konfigurationsinformationen durch die Endgerätevorrichtung verwendet werden, um Datenübertragung in dem ersten BWP durchzuführen.

3. Verfahren nach Anspruch 2, wobei Y₁ Statusinformationselemente in den Y Statusinformationselementen zusätzlich zweite Konfigurationsinformationen angeben, die zweiten Konfigurationsinformationen durch die Endgerätevorrichtung zum Durchführen von Datenübertragung in dem zweiten BWP verwendet werden und Y₁ eine positive Ganzzahl ist.

4. Verfahren nach Anspruch 2 oder 3, wobei Y₂ Statusinformationselemente in den Y Statusinformationselementen zusätzlich die ersten Konfigurationsinformationen angeben und Y₂ eine positive Ganzzahl ist.

5. Verfahren nach einem der Ansprüche 2 bis 4, wobei Y₃ Statusinformationselemente in den Y Statusinformationselementen zusätzlich zweite BWP-Umschaltinformationen angeben, die zweiten BWP-Umschaltinformationen die Endgerätevorrichtung anweisen, von dem zweiten BWP auf das erste BWP umzuschalten, und Y₃ eine positive Ganzzahl ist.

6. Verfahren nach einem der Ansprüche 2 bis 5, wobei eine Bandbreite des ersten BWP eine Mindestbandbreite ist, die zum Erlangen von Downlink-Daten in einem Prozess benötigt wird, in dem die Endgerätevorrichtung auf die Netzwerkvorrichtung zugreift; oder
die Bandbreite des ersten BWP die Mindestbandbreite ist, die für einen Prozess benötigt wird, bei dem die Endgerätevorrichtung Datenübertragung mit der Netzwerkvorrichtung durchführt.

7. Datenübertragungsverfahren, umfassend:
Bestimmen durch eine Netzwerkvorrichtung (1000),
von ersten Steuerinformationen, wobei die ersten Steuerinformationen Konfigurationsinformationen angeben, die durch eine Endgerätevorrichtung zum Durchführen von Datenübertragung verwendet werden, oder BWP-Umschaltinformationen angeben, die durch die Endgerätevorrichtung zum Durchführen von BWP-Umschaltung verwendet werden; und
Senden der ersten Steuerinformationen an die Endgerätevorrichtung durch die Netzwerkvorrichtung,
wobei, dass die ersten Steuerinformationen Konfigurationsinformationen der Endgerätevorrichtung angeben oder BWP-Umschaltinformationen angeben, die durch die Endgerätevorrichtung zum Durchführen von BWP-Umschaltung verwendet werden, Folgendes umfasst:
die ersten Steuerinformationen umfassen K Bits, die ersten Steuerinformationen entsprechen einer von 2^{K} Arten von Statusinformationen, die den K Bits entsprechen, und K ist eine positive Ganzzahl, wobei
X Statusinformationselemente in den 2^{K} Arten von Statusinformationen verwendet werden, um die Konfigurationsinformationen anzugeben, die durch die Endgerätevorrichtung zum Durchführen von Datenübertragung verwendet werden; Y Statusinformationselemente in den 2^{K} Arten von Statusinformationen verwendet werden, um die BWP-Umschaltinformationen anzugeben; sich die X Statusinformationselemente alle von den Y Statusinformationselementen unterscheiden; sowohl X als auch Y positive Ganzzahlen sind; und X+Y≤2^{K}.

8. Verfahren nach Anspruch 7, wobei die Y Statusinformationselemente in den ersten Steuerinformationen erste BWP-Umschaltinformationen angeben, die ersten BWP-Umschaltinformationen die Endgerätevorrichtung anweisen, von einem ersten BWP auf ein zweites BWP umzuschalten, und sich das erste BWP von dem zweiten BWP unterscheidet;
die X Statusinformationselemente in den ersten Steuerinformationen erste Konfigurationsinformationen angeben und die ersten Konfigurationsinformationen durch die Endgerätevorrichtung verwendet werden, um Datenübertragung in dem ersten BWP durchzuführen.

9. Verfahren nach Anspruch 8, wobei Y₁ Statusinformationselemente in den Y Statusinformationselementen zusätzlich zweite Konfigurationsinformationen angeben, die zweiten Konfigurationsinformationen durch die Endgerätevorrichtung zum Durchführen von Datenübertragung in dem zweiten BWP verwendet werden und Y₁ eine positive Ganzzahl ist.

10. Verfahren nach Anspruch 8 oder 9, wobei Y₂ Statusinformationselemente in den Y Statusinformationselementen zusätzlich die ersten Konfigurationsinformationen angeben und Y₂ eine positive Ganzzahl ist.

11. Verfahren nach einem der Ansprüche 8 bis 10, wobei Y₃ Statusinformationselemente in den Y Statusinformationselementen zusätzlich zweite BWP-Umschaltinformationen angeben, die zweiten BWP-Umschaltinformationen die Endgerätevorrichtung anweisen, von dem zweiten BWP auf das erste BWP umzuschalten, und Y₃ eine positive Ganzzahl ist.

12. Verfahren nach einem der Ansprüche 8 bis 11, wobei eine Bandbreite des ersten BWP eine Mindestbandbreite ist, die zum Erlangen von Downlink-Daten in einem Prozess benötigt wird, in dem die Endgerätevorrichtung auf die Netzwerkvorrichtung zugreift; oder
die Bandbreite des ersten BWP die Mindestbandbreite ist, die für einen Prozess benötigt wird, bei dem die Endgerätevorrichtung Datenübertragung mit der Netzwerkvorrichtung durchführt.

13. Kommunikationsvorrichtung, wobei die Kommunikationsvorrichtung konfiguriert ist, um das Verfahren nach einem der Ansprüche 1 bis 6 durchzuführen, oder die Kommunikationsvorrichtung konfiguriert ist, um das Verfahren nach einem der Ansprüche 7 bis 12 durchzuführen.

## Revendications

1. Procédé de transmission de données, comprenant :
la réception (S101), par un dispositif terminal, de premières informations de commande envoyées par un dispositif réseau, dans lequel les premières informations de commande indiquent les informations de configuration utilisées par le dispositif terminal pour réaliser la transmission de données ou indiquent les informations de commutation de partie de bande passante, BWP, utilisées par le dispositif terminal pour réaliser une commutation de BWP ;
lorsque (S102) les premières informations de commande indiquent les informations de configuration, la réalisation, par le dispositif terminal, d'une transmission de données sur la base des informations de configuration ; ou
lorsque (S102) les premières informations de commande indiquent les informations de commutation de BWP, la réalisation, par le dispositif terminal, d'une commutation de BWP sur la base des informations de commutation de BWP,
dans lequel le fait que les premières informations de commande indiquent des informations de configuration utilisées par le dispositif terminal pour réaliser la transmission de données ou indiquent des informations de commutation de BWP utilisées par le dispositif terminal pour réaliser une commutation de BWP comprend :
les premières informations de commande comprennent K bits, les premières informations de commande correspondent à un type d'information d'état dans 2^{K} états correspondant aux K bits, et K est un entier positif, dans lequel
X éléments d'informations d'état dans les 2^{K} types d'informations d'état sont utilisés pour indiquer les informations de configuration utilisées par le dispositif terminal pour réaliser la transmission de données, Y éléments d'informations d'état dans les 2^{K} types d'informations d'état sont utilisés pour indiquer les informations de commutation de BWP, les X éléments d'informations d'état sont tous différents des Y éléments d'informations d'état, X et Y sont tous deux des entiers positifs, et X+Y≤2^{K}.

2. Procédé selon la revendication 1, dans lequel les Y éléments d'informations d'état dans les premières informations de commande indiquent les premières informations de commutation de BWP, les premières informations de commutation de BWP indiquent au dispositif terminal de commuter d'une première BWP à une seconde BWP, et la seconde BWP est différente de la première BWP ;
Les X éléments d'informations d'état dans les premières informations de commande indiquent des premières informations de configuration, et les premières informations de configuration sont utilisées par le dispositif terminal pour réaliser la transmission de données dans la première BWP.

3. Procédé selon la revendication 2, dans lequel Y₁ éléments d'informations d'état dans les Y éléments d'informations d'état indiquent en outre les secondes informations de configuration, les secondes informations de configuration sont utilisées par le dispositif terminal pour réaliser la transmission de données dans la seconde BWP, et Y₁ est un entier positif.

4. Procédé selon la revendication 2 ou 3, dans lequel Y₂ éléments d'informations d'état dans les Y éléments d'informations d'état indiquent en outre les premières informations de configuration, et Y₂ est un entier positif.

5. Procédé selon l'une quelconque des revendications 2 à 4, dans lequel Y₃ éléments d'informations d'état dans les Y éléments d'informations d'état indiquent en outre les informations de commutation de la seconde BWP, les informations de commutation de la seconde BWP indiquent au dispositif terminal de commuter de la seconde BWP à la première BWP, et Y₃ est un entier positif.

6. Procédé selon l'une quelconque des revendications 2 à 5, dans lequel une bande passante de la première BWP est une bande passante minimale nécessaire pour l'obtention des données de liaison descendante dans un processus au cours duquel le dispositif terminal accède au dispositif réseau ; ou
une bande passante de la première BWP est une bande passante nécessaire à un processus dans lequel le dispositif terminal réalise une transmission de données avec le dispositif réseau.

7. Procédé de transmission de données, comprenant :
la détermination, par un dispositif réseau (1000),
de premières informations de commande, dans lequel les premières informations de commande indiquent des informations de configuration utilisées par le dispositif terminal pour réaliser la transmission de données ou indiquent des informations de commutation de BWP utilisées par le dispositif terminal pour réaliser la commutation de BWP ; et
l'envoi, par le dispositif réseau, des premières informations de commande au dispositif terminal,
dans lequel le fait que les premières informations de commande indiquent des informations de configuration du dispositif terminal ou indiquent des informations de commutation de BWP utilisées par le dispositif terminal pour réaliser la commutation de BWP comprend :
les premières informations de commande comprennent K bits, les premières informations de commande correspondent à un de 2^{K} types d'informations d'état correspondant aux K bits, et K est un entier positif, dans lequel
X éléments d'informations d'état dans les 2^{K} types d'informations d'état sont utilisés pour indiquer les informations de configuration utilisées par le dispositif terminal pour réaliser la transmission de données, Y éléments d'informations d'état dans les 2^{K} types d'informations d'état sont utilisés pour indiquer les informations de commutation de BWP, les X éléments d'informations d'état sont tous différents des Y éléments d'informations d'état, X et Y sont tous deux des entiers positifs, et X+Y≤2^{K}.

8. Procédé selon la revendication 7, dans lequel les Y éléments d'informations d'état dans les premières informations de commande indiquent les premières informations de commutation de BWP, les premières informations de commutation de BWP indiquent au dispositif terminal de commuter d'une première BWP à une seconde BWP, et la première BWP est différente de la seconde BWP ;
Les X éléments d'informations d'état dans les premières informations de commande indiquent des premières informations de configuration, et les premières informations de configuration sont utilisées par le dispositif terminal pour réaliser la transmission de données dans la première BWP.

9. Procédé selon la revendication 8, dans lequel Y₁ éléments d'informations d'état dans les Y éléments d'informations d'état indiquent en outre les secondes informations de configuration, les secondes informations de configuration sont utilisées par le dispositif terminal pour réaliser la transmission de données dans la seconde BWP, et Y₁ est un entier positif.

10. Procédé selon la revendication 8 ou 9, dans lequel Y₂ éléments d'informations d'état dans les Y éléments d'informations d'état indiquent en outre les premières informations de configuration, et Y₂ est un entier positif.

11. Procédé selon l'une quelconque des revendications 8 à 10, dans lequel Y₃ éléments d'informations d'état dans les Y éléments d'informations d'état indiquent en outre les informations de commutation de la seconde BWP, les informations de commutation de la seconde BWP indiquent au dispositif terminal de commuter de la seconde BWP à la première BWP, et Y₃ est un entier positif.

12. Procédé selon l'une quelconque des revendications 8 à 11, dans lequel une bande passante de la première BWP est une bande passante minimale nécessaire pour l'obtention des données de liaison descendante dans un processus au cours duquel le dispositif terminal accède au dispositif réseau ; ou
une bande passante de la première BWP est une bande passante nécessaire à un processus dans lequel le dispositif terminal réalise une transmission de données avec le dispositif réseau.

13. Dispositif de communication, dans lequel le dispositif de communication est configuré pour réaliser le procédé selon l'une quelconque des revendications 1 à 6, ou le dispositif de communication est configuré pour réaliser le procédé selon l'une quelconque des revendications 7 à 12.
